(19) Europäisches Patentamt
European Patent Office
Office européen des brevets

(11) **EP 3 809 141 B1**

(12) **EUROPEAN PATENT SPECIFICATION**

(45) Date of publication and mention
of the grant of the patent:
**08.05.2024 Bulletin 2024/19**

(21) Application number: **18922501.4**

(22) Date of filing: **13.06.2018**

(51) International Patent Classification (IPC):
*G01P 3/36* (2006.01)   *G01P 3/80* (2006.01)
*G01S 7/48* (2006.01)   *G01S 7/481* (2006.01)
*G01S 17/10* (2020.01)   *G01S 17/88* (2006.01)
*B66B 1/34* (2006.01)

(52) Cooperative Patent Classification (CPC):
**G01P 3/366; B66B 1/3492; G01P 3/36; G01P 3/80;
G01S 7/4808; G01S 7/4816; G01S 17/10;
G01S 17/88**

(86) International application number:
**PCT/JP2018/022646**

(87) International publication number:
**WO 2019/239536 (19.12.2019 Gazette 2019/51)**

(54) **ELEVATOR COMPRISING A DEVICE FOR MEASURING THE SPEED OF THE ELEVATOR**

AUFZUG MIT EINER VORRICHTUNG ZUR MESSUNG DER GESCHWINDIGKEIT DES SICH
BEWEGENDEN AUFZUGS

ASCENSEUR COMPRENANT UN DISPOSITIF DE MESURE DE LA VITESSE DE L'ASCENCEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.04.2021 Bulletin 2021/16**

(73) Proprietor: **Hitachi, Ltd.**
**Tokyo 100-8280 (JP)**

(72) Inventors:
• **ONISHI, Yoshito**
  **Tokyo 100-8280 (JP)**
• **SEO, Yoshiho**
  **Tokyo 100-8280 (JP)**
• **INOUE, Shinsuke**
  **Tokyo 100-8280 (JP)**

(74) Representative: **Mewburn Ellis LLP**
**Aurora Building**
**Counterslip**
**Bristol BS1 6BX (GB)**

(56) References cited:
EP-B1- 0 710 817      WO-A1-95/01549
WO-A1-98/53327      WO-A1-2006/073015
WO-A1-2015/068301    WO-A1-2015/068301
JP-A- S6 350 758      JP-A- H02 281 145
JP-A- S63 139 316     JP-A- 2002 274 765
JP-A- 2002 340 923    JP-A- 2010 190 675
JP-A- 2011 073 885    US-A1- 2002 112 926
US-A1- 2013 100 438

• Lars Fermum: "Exposure time of area scan
cameras -avoid motion blur - calculation for
industrial machine vision", , 2 June 2014
(2014-06-02), XP055121128, Retrieved from the
Internet:
URL:http://www.vision-doctor.co.uk/area-sc
an-cameras/exposure-time-area-scan-camera.
html [retrieved on 2014-06-02]

## Description

[Technical Field]

The present invention relates to an elevator comprising a car and a velocity measurement apparatus measuring the velocity of the car.

[Background Art]

Sensors that measure the positions and velocities of cars of elevators include non-contact velocity sensors. Measurement of the position and velocity of a car using a non-contact velocity sensor negates the need of an elongated structural object, such as a governor rope playing a role of a safety apparatus that monitors the elevating velocity, and prevents occurrence of a measurement error due to slippage, such as of a contact velocity sensor. Patent Literature 1 discloses a technique of an optical car position and velocity measurement that takes an image of a structural object residing in a hoistway through an image sensor and measures the position and velocity of a car.

WO 2015/068301 A1 discloses an imaging unit being controlled while a relative speed output unit performs control for alternately switching, via an illumination switching unit at each predetermined time, illumination by a plurality of illumination units for illuminating a road surface at mutually different angles, and an image of the road surface is captured. Then, the relative speed output unit determines the illumination unit that corresponds to a captured image for calculating speed information of a moving body on the basis of the captured image from the imaging unit obtained via an acquisition unit. The relative speed output unit then calculates relative speed information of each time point on the basis of the captured image at the time of illumination by the determined illumination unit and outputs the calculated relative speed information.

JP S63 50758 A discloses a device that measures the moving speed of a moving body in a real time, by calculating the moving distance of the moving body from the difference between the positions of the moving body outputted by twice operations of a stationary image sensing camera and projected on a picture.

JP H02 281145 A discloses a device that attempts to measure an automobile from the lateral side and to make stronger the specific evidence of an automobile to be measured by obtaining the moving amount of the images of the automobiles on screens which are photographed at a specified interval with video cameras.

EP 0 710 817 B1 discloses projecting light upon a road surface from a road surface lighting light source. Diffusedly reflected light from the road surface are received by photodetectors through a spatial filter, and the light reception signals are fed to a differential amplifier circuit. A tracking band-pass filter extracts the center frequency component corresponding to the spatial frequency of a spatial filter, and an amplitude measuring circuit measures the intensity of the component. A tracking low-pass filter and an amplitude measuring circuit measure the intensities of low-frequency components corresponding to spatial frequencies lower than that of the spatial filter. A judging circuit judges whether the road surface is covered with snow, gravels, or asphalt.

JP S63 139316 A discloses a device that attempts to eliminate the light quantity shortage in the vicinity of an observation field, and to improve the focusing performance by placing a ring-shaped parallel deflecting member for reducing the diameter of a ring-shaped parallel illuminating luminous flux, between a perforated mirror of a field illuminating device and a ring-shaped lens or a ring-shaped mirror.

US 2002/112926 A1 discloses an apparatus and a method for generating hoistway information from images of the surface patterns of a hoistway component such as a guide rail sensed by a CCD line camera. The image data are input into a first correlator which uses an incremental position of a new image and an absolute position of a preceding image to generate an estimated position. The estimated position is input into a second correlator and is used to locate the relevant database sector in which the image which was stored in the database during calibration is situated. The second correlator compares the new image with the stored image and determines from the position index of the stored image the absolute position of the elevator car which is transmitted to the elevator control.

[Citation List]

[Patent Literature]

[Patent Literature 1]
Japanese Patent Laid-Open No. 2011-73885

[Summary of Invention]

[Technical Problem]

Unfortunately, when a stationary structural object is imaged from the top of a car moving at high speed, a subject blur occurs in the moving direction of the car, thus causing a factor of degrading velocity measurement accuracy.

The present invention has an object to suppress occurrence of a subject blur in the moving direction of a mobile object in an image where a stationary structural object has been taken from the mobile object.

[Solution to Problem]

To solve the problem described above, according to a first aspect of the present invention there is provided an elevator according to claim 1.

[Advantageous Effects of Invention]

The present invention can suppress occurrence of a subject blur in the moving direction of the mobile object in an image where a stationary structural object has been taken from the mobile object. As a result, the measurement accuracy of the velocity of the mobile object can be improved.

[Brief Description of Drawings]

[Figure 1] Figure 1 is a block diagram showing an overall configuration of an elevator optical velocity measurement apparatus in Embodiment 1 of the present invention.
[Figure 2] Figure 2 is a schematic diagram showing an image which has been taken through a gate image sensor in Embodiment 1 of the present invention and which indicates a scattered luminance distribution on a stationary structural object surface.
[Figure 3] Figure 3 is a timing chart of a gate signal transmitted from a timing controller to the gate image sensor in Embodiment 1 of the present invention.
[Figure 4] Figure 4 is a flowchart showing a velocity measurement process of an image processor in Embodiment 1 of the present invention.
[Figure 5] Figure 5 schematically shows a configuration of an imaging optical system in Embodiment 2 which does not fall under the scope of the present invention.
[Figure 6] Figure 6 schematically shows a configuration of an imaging optical system in Embodiment 3 according to the present invention.
[Figure 7] Figure 7 schematically shows a configuration of an optical transmitter in Embodiment 4 of the present invention.
[Figure 8] Figure 8 schematically shows the positional relationship between components of an elevator optical velocity measurement apparatus in Embodiment 5 of the present invention.
[Figure 9] Figure 9 schematically shows an overall configuration of an elevator optical velocity measurement apparatus in Embodiment 6 of the present invention.
[Figure 10] Figure 10 is a conceptual diagram showing a schematic configuration of a specular reflected light separation optical system in Embodiment 6 of the present invention.
[Figure 11] Figure 11 is a conceptual diagram showing a schematic configuration of a specular reflected light separation optical system in Embodiment 7 of the present invention.
[Figure 12] Figure 12 is a conceptual diagram showing a schematic configuration of a specular reflected light separation optical system in Embodiment 8 of the present invention.

[Figure 13] Figure 13 schematically shows an overall configuration of an elevator optical velocity measurement apparatus in Embodiment 9 of the present invention.
[Figure 14] Figure 14 is a timing chart of a gate signal output from a timing controller, and scattered light incident on a gate image sensor in Embodiment 10 of the present invention.

[Description of Embodiments]

Hereinafter, referring to the drawings, embodiments are described.

[Embodiment 1]

This embodiment uses, for example, an elevator car as a mobile object, emits illumination light toward a surface of the stationary structural object, which is a subject, from the elevator car, allows the reflected light reflected by the surface of the stationary structural object to enter the imaging plane of the gate image sensor through the imaging optical system, causes the gate image sensor to convert an optical signal into an electric signal, and measures the moving velocity of the elevator car on the basis of an image generated from the converted electric signal. The exposure time period at the gate image sensor is set to be less than 100 μs.

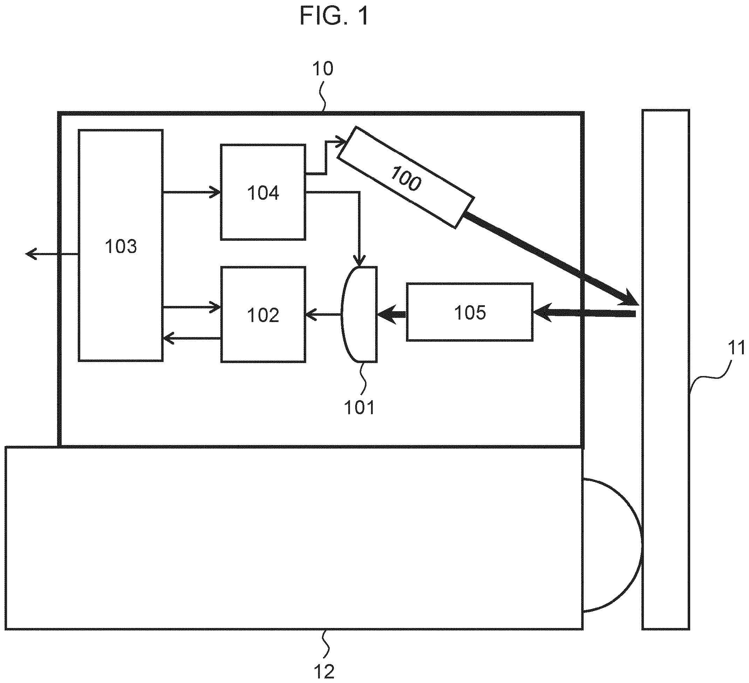

Figure 1 schematically shows an overall configuration of an elevator optical velocity measurement apparatus in Embodiment 1 of the present invention. In Figure 1, the elevator optical velocity measurement apparatus 10 is disposed on an upper part of the elevator car 12 that goes up and down in a hoistway of a building (not shown). In the hoistway (a movement path of a mobile object), there is arranged a stationary structural object 11 including guide rails along the hoistway. The elevator optical velocity measurement apparatus 10 outputs signal information useful for operation control of the elevator car 12, for example, signal information about the moving velocity and position of the elevator car 12, to a control board (not shown) that perform operation control of the elevator car 12.

Specifically, the elevator optical velocity measurement apparatus 10 includes an optical transmitter 100, a gate image sensor 101, an image processor 102, an overall controller 103, a timing controller 104, and an imaging optical system 105. Note that in Figure 1, for the sake of convenience of description, the optical path is indicated by thick solid arrows, and the paths of electric signals are indicated by thin solid arrows.

The optical transmitter 100 includes a light source (not shown), and is arranged so as to emit light to the surface of the stationary structural object 11, for example, a guide rail, in an elevator hoistway. Here, the light indicates electromagnetic waves, which may be, for example, visible light, infrared rays, ultraviolet rays or the like. As the light source, a temporally and spatially incoherent light source, such as an LED (Light Emitting Diode) or a halogen lamp, may be adopted. Alternatively, a temporally and spatially coherent light source, such as a laser light source, may be adopted.

The imaging optical system 105 is configured as an optical system that forms an image of scattered light that is an emitted light beam (emitted light) having been emitted from the optical transmitter 100 toward the surface of the stationary structural object 11 and has been reflected by the surface of the stationary structural object 11, on an imaging plane of the gate image sensor 101. The gate image sensor 101 converts an optical signal into an electric signal according to the luminances of the optical signal, and transmits the electric signal, as an image signal indicating a dark-field image, to the image processor 102; the optical signal is an optical signal from the imaging optical system 105 (an optical signal indicating the scattered luminance distribution on the surface of the stationary structural object 11) and is an optical signal image-formed on the imaging plane including a plurality of pixels. As the gate image sensor 101, for example, a CCD (Charge Coupled Device) image sensor, or a CMOS (Complementary Metal Oxide Semiconductor) image sensor may be adopted. The gate image sensor 101 may be a two-dimensional area sensor, or a one-dimensional line sensor that has a spatially resolving function in the moving direction of the elevator car 12. Note that besides the imaging optical system 105, a wavelength-selective filter, such as a bandpass filter, may be provided on the paths of the incident light and scattered light; the filter may have a role of removing outside light other than what has a desired wavelength. In order to protect the elevator optical velocity measurement apparatus 10 to prevent grit and dust from entering the elevator optical velocity measurement apparatus 10, a window member may be provided on the paths of the incident light and scattered light.

The timing controller 104 generates a plurality of gate signals (gate pulse signals) on the basis of information from the overall controller 103, and transmits one gate signal among the generated gate signals to the optical transmitter 100, while transmitting the other gate signal to the gate image sensor 101. The one gate signal is used as a timing signal for defining a drive time period of the light source in the optical transmitter 100. The other gate signal is used as a timing signal for defining an exposure time period in the gate image sensor 101. The image processor 102 processes the electric signal (the image signal indicating a dark-field image) from the gate image sensor 101, for example, as an image that is according to the scattered luminance distribution of the surface of the stationary structural object 11 and is a spatially resolved image, and calculates signal information about the elevator car 12, for example, signal information about the moving velocity and position of the elevator car 12, from a result of this image processing, and outputs the calculated signal information to the overall controller 103. The overall controller 103 controls the image processor 102 and the timing controller 104, and outputs the signal information from the image processor 102 (signal information about the elevator car 12) to the outside (control board).

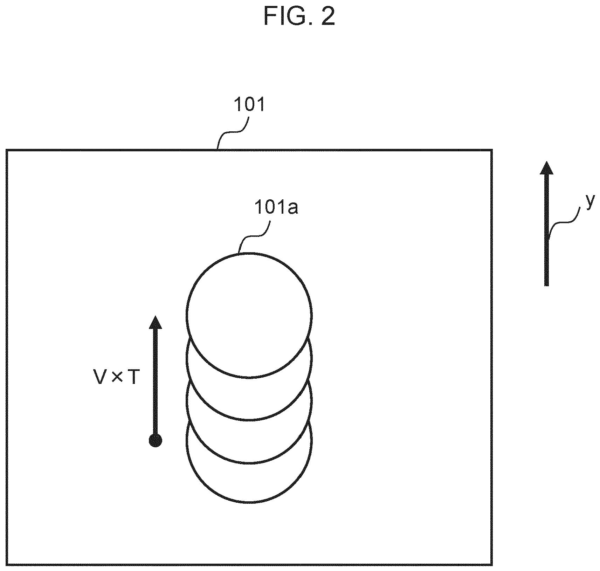

Next, the image of the scattered luminance distribution obtained by imaging the stationary structural object surface is described. Figure 2 is a schematic diagram showing the image that is obtained by imaging through the gate image sensor 101, and is the image of the scattered luminance distribution on the stationary structural object surface. A time period smaller than a time period obtained from the ratio between the spatial resolution of the pixels of the gate image sensor 101 and the maximum moving velocity of the elevator car 12 (the maximum moving velocity at which the elevator car 12 is able to move) is adopted as an exposure time period T of the gate image sensor 101, and the stationary structural object 11, which is the subject, is imaged from the elevator car 12 moving at high speed (moving velocity V); as shown in Figure 2, on an image 101a of the scattered luminance distribution of the subject surface (stationary structural object surface), subject blurs occur in the moving direction y of the elevator car 12 (multiple images overlap each other to cause blurs). That is, blurs occur in the image 101a, with a width of V (moving velocity)$\times$T (exposure time period), which is proportional to the exposure time period T in the gate image sensor 101. If image processing is applied in a state where the image 101a having blurs, the moving velocity and position of the elevator car 12 cannot be correctly calculated.

To improve the velocity resolution and the position detecting resolution due to blurs of the image 101a, and suppress occurrence of subject blurs in the image 101a in the moving direction y of the elevator car 12, it is required to sufficiently suppress the exposure time period T in consideration of the moving velocity V of the elevator car 12. In this embodiment, a time period shorter than a time period obtained from the ratio between the spatial resolution of the pixels of the gate image sensor 101 and the maximum moving velocity Vm of the elevator car 12 is adopted as the exposure time period T of the gate image sensor 101, and the stationary structural object 11 is imaged from the elevator car 12 moving at high speed (moving velocity V). Accordingly, an image without occurrence of subject blurs in the moving direction y of the elevator car 12 is obtained as the image 101a of the scattered luminance distribution of the subject surface (stationary structural object surface).

In this case, with respect to the required spatial resolution $\delta x$, there is a relationship of $T < \delta x / Vm$ between the exposure time period T and the maximum moving velocity Vm of the elevator car 12. Here, for example, to obtain a spatial resolution $\delta x$ of 0.5 mm for the elevator car 12 moving at the maximum moving velocity of 5 m/s, the exposure time period T of the gate image sensor 101 is less than 100 $\mu$s. That is, provided that the exposure time period T of the gate image sensor 101 is less than 100 $\mu$s (the pulse width of the gate signal transmitted from the timing controller 104 to the gate image sensor 101 is less than 100 μs), an image without subject blurs in the moving direction y of the elevator car 12 can be obtained as the image 101a of the scattered luminance distribution on the subject surface (stationary structural object surface) even when the stationary structural object 11 is imaged from the elevator car 12 moving at high speed (moving velocity V).

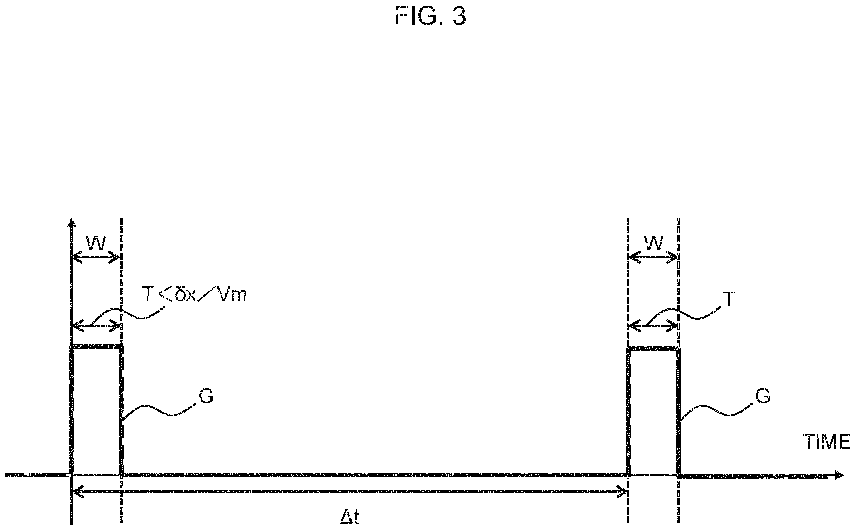

Figure 3 is a timing chart of the gate signal transmitted from the timing controller 104 to the gate image sensor 101. The timing controller 104 transmits the gate signal G to the gate image sensor 101 at each frame period $\Delta t$. The pulse width W of the gate signal G is set to a value corresponding to the exposure time period T, which is less than 100 μs. That is, in response to the pulse of the gate signal G from the timing controller 104, the gate image sensor 101 performs exposure for the time period of the pulse width W (the exposure time period T less than 100 μs). In this case, the pulse width W of the gate signal G to be transmitted from the timing controller 104 to the optical transmitter 100 may be set to a value corresponding to the exposure time period T less than 100 μs, to achieve a lighting period of the light source that is the exposure time period T. Accordingly, the average output power of the optical transmitter 100 per unit time can be reduced, and the power required for driving and heat radiation can be suppressed.

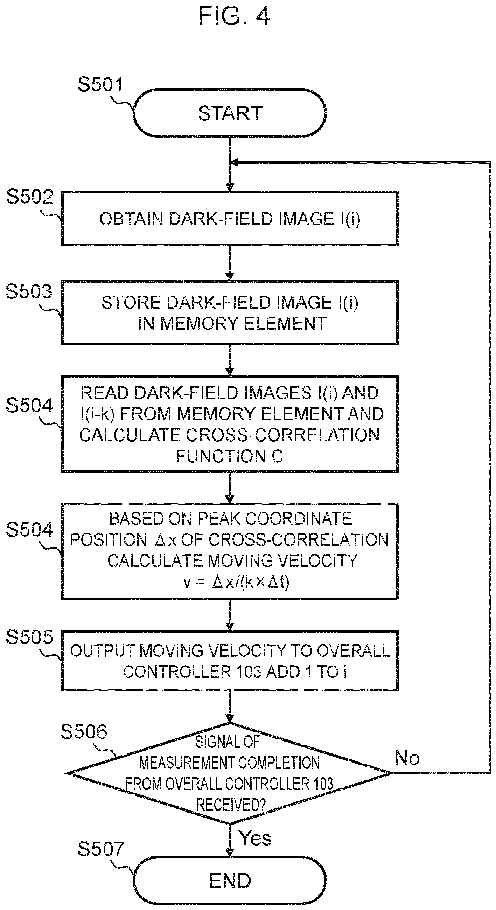

Next, the velocity measurement process in the image processor 102 is described. Figure 4 is a flowchart showing a velocity measurement process by the elevator optical velocity measurement apparatus 10 in this embodiment. In this embodiment, for the sake of easy understanding, description is made with a velocity measurement process according to a correlation function method. However, the method of calculating the velocity is not limited to the correlation function method.

First, the image processor 102 starts the processing on condition of reception of a signal of starting measurement from the overall controller 103 (S501), and obtains a dark-field image I(i) with respect to each frame i from the gate image sensor 101 (S502).

Next, the image processor 102 stores the obtained frame i of the dark-field image I(i), in a memory element (memory) in the image processor 102 (S503). Note that the memory element may be a volatile memory, such as a register included in the image processor 102 or the overall controller 103, or a nonvolatile memory arranged outside.

Next, the image processor 102 reads, from the memory element, the frame i of the dark-field image I(i) stored in the memory element in step S502, while reading, from the memory element, the frame (i-k) of the dark-field image I(i-k) stored in the memory element before the frame i, and calculates the cross-correlation function C between the read dark-field image I(i) and dark-field image I(i-k) (S504). Note that as to the method of selecting the former frame of the dark-field image, an immediately previous frame of the dark-field image may be selected, or a multiple-frame-previous dark-field image may be selected. Another method may be adopted as the method of calculating the cross-correlation function.

Next, the image processor 102 estimates the peak coordinate position $\Delta x$ of the cross-correlation function C through calculation of the cross-correlation function C, calculates a time period $k \times \Delta t$ from the dark-field image I(i-k) to the dark-field image I(i) among the dark-field images read in step S504, and calculates the moving velocity V of the elevator car 12 = $\Delta x/(k \times \Delta t)$, from the ratio between the peak coordinate position $\Delta x$ and the time period $k \times \Delta t$. Note that also for the method of estimating the peak coordinate position $\Delta x$, the position may be the peak coordinate at the maximum position, or may be estimated by least squares fitting using several points around the maximum position. The method is not specifically limited.

Next, the image processor 102 outputs information on the moving velocity V to the overall controller 103, adds "1" to the frame i (S505), determines whether a signal of measurement completion from the overall controller 103 is received or not (S506). If the signal of measurement completion is not received from the overall controller 103, the processing returns to step S502, and repeats the processes in steps S502 to S506. On the contrary, if the image processor 102 determines that the signal of measurement completion is received from the overall controller 103 in S506, this processor finishes the processes of this routine (S507).

The image processor 120 sequentially captures the electric signal from the gate image sensor 101 with a frame period corresponding to an occurrence period of the gate signal output from the timing controller 104, generates a dark-field image on a frame-by-frame basis from each electric signal, calculates a displacement on the dark-field image occurring between a first measurement target image (a measurement target image including a characteristic image) in a first frame of the dark-field image, and a second measurement target image (a measurement target image including a characteristic image identical to the first measurement target image) that is a measurement target image in a second frame of the dark-field image and corresponds to the first measurement target image, among the generated frames of the dark-field image, and calculates the velocity of the elevator car (mobile object) 12 from a ratio between the calculated displacement on the dark-field image, and a time period indicating a difference between the first frame and the second frame.

When the overall controller 103 receives information about the moving velocity V from the image processor 102, this controller stores the received information in the memory element, or transmits the received information to a management apparatus (not shown). In this case, the management apparatus may display information about the velocity vector, thereby issuing a notification to an administrator of the elevator. Note that the image processor 102 may calculate only the car moving velocity in the moving direction of the elevator car 12.

In this embodiment, the exposure time period T of the gate image sensor 101 is reduced to be less than 100 μs. Accordingly, occurrence of subject blurs in the moving direction of the elevator car 12 in the image obtained by imaging the stationary structural object 11 from the elevator car 12 can be suppressed. That is, an image where no subject blur occurs in the moving direction of the elevator car 12 can be obtained. As a result, the measurement accuracy of the moving velocity of the elevator car 12 can be improved.

[Embodiment 2]

This embodiment, which does not fall under the scope of the present invention, includes a robust imaging optical system 105 that keeps the imaging magnification more invariant with respect to shakes of the elevator car 12 in the z-axis direction than the imaging optical system 105 in Embodiment 1. The other components are similar to those in Embodiment 1. Accordingly, description thereof is omitted.

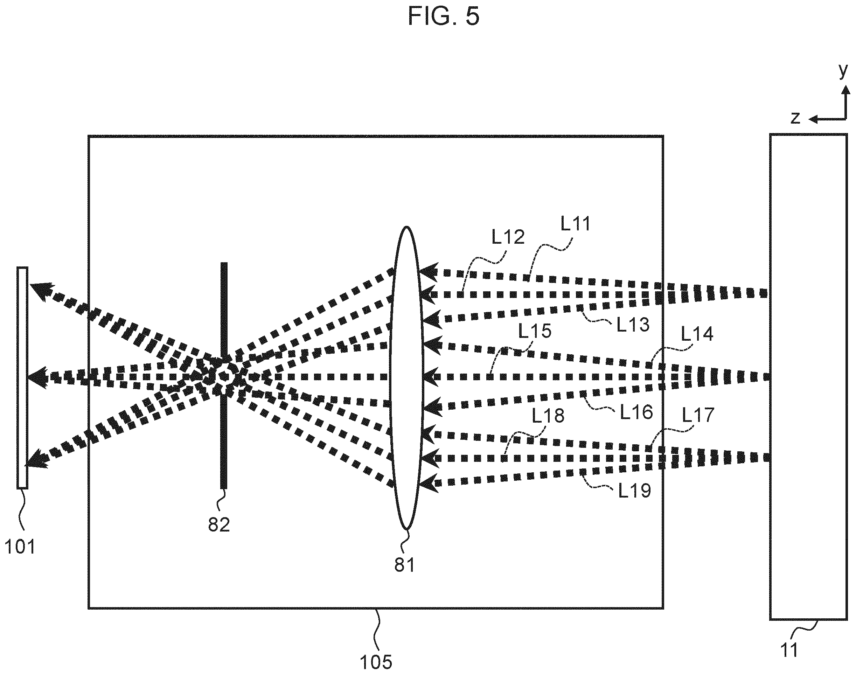

Figure 5 is a conceptual diagram showing the configuration of the imaging optical system 105 in Embodiment 2, which does not fall under the scope of the present invention. Note that in Figure 5, scattered light beams (scattered light) L11 to L19 from the stationary structural object 11 are indicated by dotted arrows. In Figure 5, the imaging optical system 105 is disposed so as to face the stationary structural object 11, and includes: an objective lens (first lens) 81 that collects the scattered light reflected by the stationary structural object 11; and a diaphragm 82 that limits the quantity of light collected by the objective lens 81 and transmits the scattered light, whose quantity of light is limited, to the imaging plane of the gate image sensor 101. In this case, the imaging optical system 105 has an optical arrangement that is telecentric toward the object (toward the stationary structural object 11) so as to eliminate the effects of change in magnification when the stationary structural object 11 serving as a subject (detection target) is relatively blurred in the z-axis direction (a direction orthogonal to the moving direction (y-axis direction) of the elevator car 12) with respect to the elevator car 12.

That is, the imaging optical system 105 in this embodiment is arranged such that the center of the imaging plane of the gate image sensor 101, the center of the diaphragm 82 and the center of the optical axis of the objective lens 81 are on a common straight line, and the diaphragm 82 is disposed at the focal position of the objective lens 81 nearer to the gate image sensor 101. The scattered light beams L11 to L19 from the stationary structural object 11 pass through the objective lens 81, and are subsequently image-formed on the imaging plane of the gate image sensor 101. In this case, among the scattered light beams L11 to L19, scattered light beams L12, L15 and L18 have larger quantity of light than the other scattered light beams, serve as principal rays, always become parallel to the optical axis of the objective lens 81, and enter the objective lens 81. Note that the y axis and z axis are virtual axes formed on the stationary structural object 11. The y axis indicates an axis parallel to the moving direction of the elevator car 12. The z axis indicates an axis that is orthogonal to the moving direction of the elevator car 12, and is parallel to the optical axis of the imaging optical system 105.

According to this embodiment, which does not fall under the scope of the present invention, the scattered light beams L12, L15 and L18 from the stationary structural object 11 serve as principal rays, always become parallel to the optical axis of the objective lens 81 and enter the objective lens 81. Accordingly, even when the image of the stationary structural object 11 is blurred in the optical axis (z-axis) direction with respect to shakes of the elevator car 12 in the z-axis direction, the magnification of the image formed on the imaging plane of the gate image sensor 101 becomes constant, and the measured value of the movement amount Δy of the elevator car 12 in the y direction can be kept constant with respect to the shakes in the z-axis direction of the elevator car 12.

In this embodiment, the objective lens 81 is disposed apart by 50 mm or more from the stationary structural object 11. For example, when the elevator car 12 is blurred by about ±5 mm in the depth direction (z-axis direction), the focus blurs of the image to occur in response to blurring of the elevator car 12 in the z-axis direction can be suppressed by disposing the objective lens 81 apart from the stationary structural object 11 by 50 mm or more. The material of the objective lens 81 may be glass. Adoption of a glass lens as the objective lens 81 can obtain sufficiently high durability in comparison with a plastic lens. The shapes of surfaces of the objective lens 81 through which the light beam passes may be configured such that both sides are spherical surfaces, or one side is a spherical surface and the other side is a planar surface. According to this configuration, even in a case where the objective lens 81 is a glass lens, the imaging optical system 105 can be configured inexpensively in comparison with aspherical surfaces.

[Embodiment 3]

This embodiment is a more robust imaging optical system according to the invention that keeps the imaging magnification at the gate image sensor 101 invariant with respect to shakes of the elevator car 12 in the z-axis direction than the imaging optical system 105 in Embodiment 1, and includes an imaging optical system 105 that more suppresses the geometric aberration that is to occur in the gate image sensor 101 than Embodiment 2. The other components are similar to those in Embodiment 1. Accordingly, description thereof is omitted.

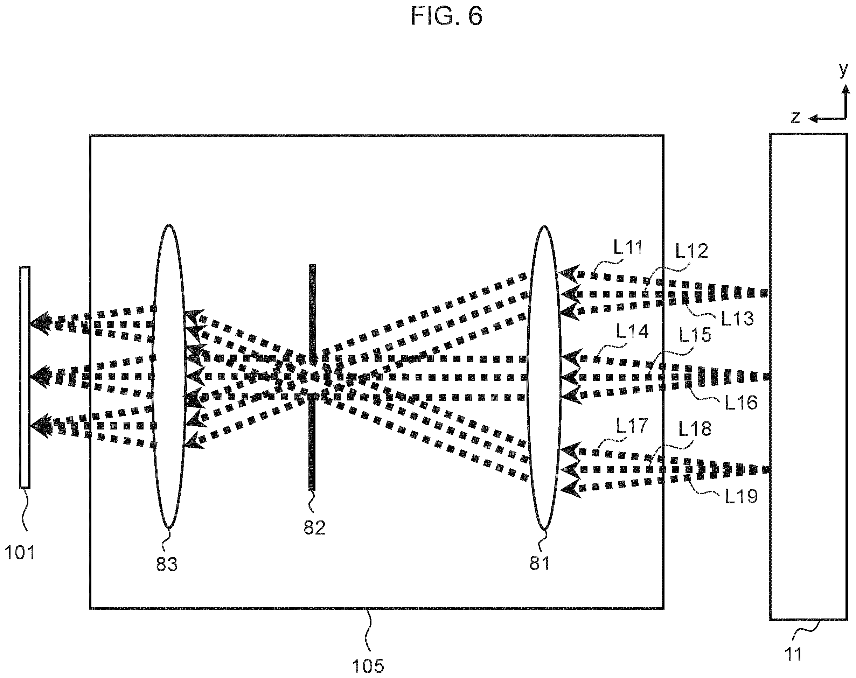

Figure 6 is a conceptual diagram showing the configuration of the imaging optical system 105 in Embodiment 3 according to the invention. Note that in Figure 6, scattered light beams (scattered light) L11 to L19 from the stationary structural object 11 are indicated by dotted arrows. In Figure 6, the imaging optical system 105 is disposed so as to face the stationary structural object 11, and includes: an objective lens (first lens) 81 that collects the scattered light reflected by the stationary structural object 11; a diaphragm 82 that limits the quantity of light collected by the objective lens 81; and a condenser lens (second lens) 83 that is disposed between the diaphragm 82 and the gate image sensor 101, collects the scattered light from the diaphragm 82, and transmits the collected scattered light toward the imaging plane of the gate image sensor 101.

In this case, to eliminates effects of change in magnification when the stationary structural object 11 serving as the subject (detection target) is relatively blurred in the z-axis direction with respect to the elevator car 12, the imaging optical system 105 adopts a telecentric optical arrangement on the object side (stationary structural object 11 side), and to suppress the geometric aberration to occur in the gate image sensor 101, the imaging optical system 105 adopts a telecentric optical arrangement on the image side (gate image sensor 101 side).

That is, the center of the imaging plane of the gate image sensor 101, the optical axis of the condenser lens 83, the center of the diaphragm 82, and the optical axis of the objective lens 81 are arranged to be located on a common straight line, and the diaphragm 82 is disposed at the focal position of the objective lens 81 nearer to the gate image sensor 101 while being disposed at the focal position of the condenser lens 83 nearer to the objective lens. The scattered light beams L11 to L19 from the stationary structural object 11 pass through the objective lens 81, and are subsequently image-formed on the imaging plane of the gate image sensor 101 through the condenser lens 83. In this case, among the scattered light beams L11 to L19, scattered light beams L12, L15 and L18 have larger quantity of light than the other scattered light beams, serve as principal rays, always become parallel to the optical axis of the objective lens 81 and enter the objective lens 81, and become parallel to the optical axis of the condenser lens 83 and enter the gate image sensor 101.

According to this embodiment, similar to Embodiment 2, if the image of the stationary structural object 11 is blurred in the optical-axis (z-axis) direction, the magnification of the image formed on the imaging plane of the gate image sensor 101 can be invariant. Furthermore, also for the displacement of the attachment position of the gate image sensor 101 in the z-axis direction, the magnification of the image formed on the imaging plane of the gate image sensor 101 can be invariant. As a result, the dimension tolerances for attaching the imaging optical system 105 and the gate image sensor 101 are allowed to be large, which can constitute a more robust optical system. Adoption of the two lenses, which are the objective lens 81 and the condenser lens 83, in the imaging optical system 105 can reduce the effects of the geometric aberration of the imaging optical system 105.

In this embodiment, similar to Embodiment 2, the objective lens 81 may be disposed apart from the stationary structural object 11 by 50 mm or more, and the objective lens 81 may be formed from a glass lens where both the sides are spherical surfaces, or one side is a spherical surface and the other side is a planar surface. The condenser lens 83 may also be formed from a glass lens where both sides are spherical surfaces, or one side is a spherical surface and the other side is a planar surface, in the shapes of surfaces of the condenser lens 83 through which the light beam passes. This configuration can constitute the imaging optical system 105 that is inexpensive and has high durability.

[Embodiment 4]

This embodiment configures, as the optical transmitter 100, an optical transmitter 100 that effectively illuminates the stationary structural object 11 that is a subject (detection target) is configured. The configurations of the gate image sensor 101, the timing controller 104, the image processor 102, and the overall controller 103 are similar to those of Embodiment 1. The configuration of the imaging optical system 105 is similar to Embodiment 2 or Embodiment 3. Accordingly, description thereof is omitted.

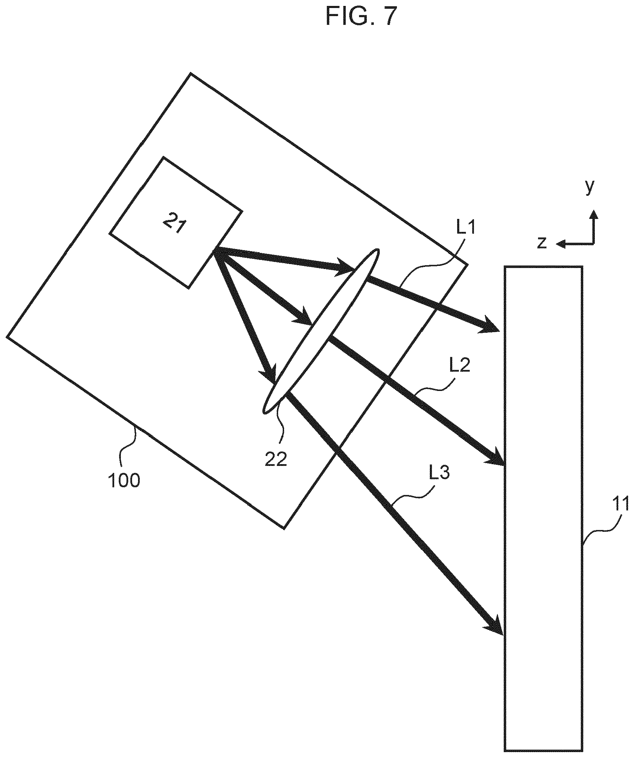

Figure 7 is a conceptual diagram showing the configuration of the optical transmitter 100 in Embodiment 4 of the present invention. Note that in Figure 7, emitted light beams (incident light incident on the stationary structural object 11) L1 to L3 from a light source 21 are indicated by solid arrows. In Figure 7, the optical transmitter 100 includes the light source 21, and an illumination lens 22 that collects light from the light source 21, and emits the collected light toward the stationary structural object 11 in a diffused manner. The illumination lens 22 is disposed between the light source 21, and the stationary structural object 11, which is the subject (detection target). The material of the illumination lens 22 may be glass or plastic. The shape of the surfaces of the illumination lens 22 through which the light beams passe may be a shape that is a spherical surface, a planar surface, or an aspherical surface. The illumination lens 22 is made up of one convex lens. Alternatively this lens may be a lens combination made up of a combination of multiple lenses. The illumination lens 22 is not limited to a transmission and reflection type condenser optical element, such as a lens, and may be a reflective condenser optical element, such as a concave mirror.

According to this embodiment, the illumination lens 22 can collect the emitted light beams L1 to L3 from the light source 21, and illuminates the surface of the stationary structural object 11 over a wide range. Consequently, the illumination lens 22 can effectively illuminate the area which is on the surface of the stationary structural object 11 and in which detection is made through the imaging optical system 105 and the gate image sensor 101. Furthermore, appropriate design of the shape of the illumination lens 22 can reduce unevenness of illuminance on the stationary structural object 11. Reduction in output intensity of the light source 21 can, in turn, reduce the power consumption of the light source 21, and can suppress occurrence of stray light from an area outside of a desired detection range.

[Embodiment 5]

This embodiment configures the positional relationship between the optical transmitter 100 and the imaging optical system 105, as an arrangement relationship for obtaining an image having sufficiently high contrast even if the exposure time period T is reduced to be less than 100 $\mu$s, by reducing capture of the specular reflected light component into the imaging optical system 105. The configurations of the gate image sensor 101, the timing controller 104, the image processor 102, and the overall controller 103 are the same as those in Embodiment 1. The configuration of the imaging optical system 105 is the same as that in Embodiment 2 or Embodiment 3. The components in the optical transmitter 100 are the same as those in Embodiment 1 or Embodiment 4.

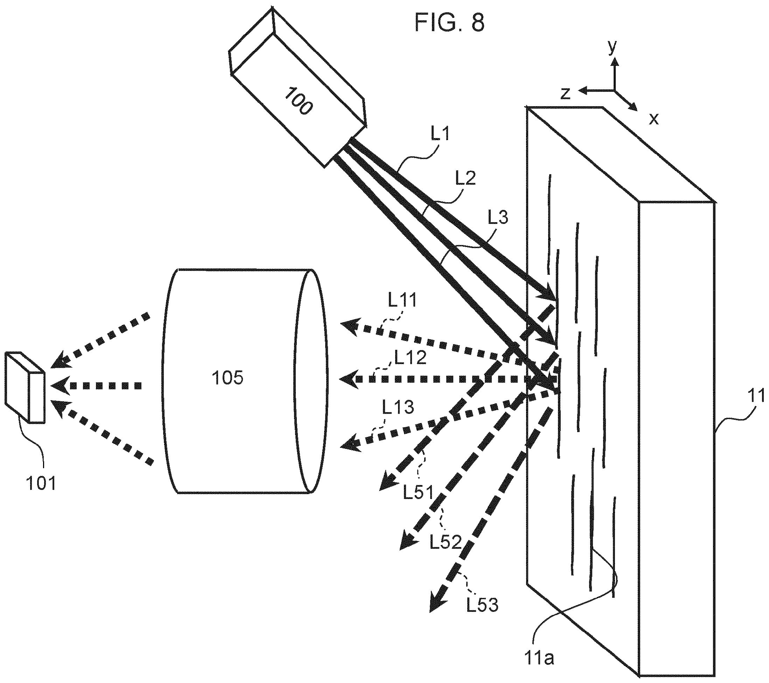

Figure 8 schematically shows the positional relationship between components of the elevator optical velocity measurement apparatus 10 in Embodiment 5 of the present invention. Note that in Figure 8, the emitted light beams (incident light incident on the stationary structural object 11) L1 to L3 from the optical transmitter 100 are indicated by solid arrows, the specular reflected light beams (specular reflected light) L51 to L53 from the stationary structural object 11 are indicated by broken arrows, and the scattered light beams (scattered light) L11 to L13 are indicated by dotted arrows.

In Figure 8, the optical transmitter 100 is arranged such that the emitted light beam L2 serving as the optical axis of the light source is obliquely incident on the surface of the stationary structural object 11 (the y axis serving as the movement direction of the elevator car 12). The imaging optical system 105 is disposed in an area which is apart from the propagation path of specular reflected light in the reflected light reflected by the surface of the stationary structural object 11 and in which the scattered light propagates. That is, the imaging optical system 105 is arranged such that among the scattered light beams (scattered light) L11 to L13 and the specular reflected light beams (specular reflected light) L51 to L53 reflected by the surface of the stationary structural object 11, only the scattered light beams (scattered light) L11 to L13 are incident thereon. The optical transmitter 100 is configured as a dark-field illumination system that allows the emitted light beams L1 to L3 to be incident as illumination light on the surface of the stationary structural object 11 in an obliquely incident manner, and reduces capture of the specular reflected light beams L51 to L53 in the imaging optical system 105.

To suppress occurrence of specular reflected light in direction of the imaging optical system 105 due to flaws 11a residing on the surface of the stationary structural object 11, the optical transmitter 100 performs illumination such that the incident surface (the yz surface in Figure 8) of the emitted light beams L1 to L3 is positioned in a direction (y-axis direction in Figure 8) parallel to the direction of the characteristic flaws 11a residing on the stationary structural object 11. In this case, the characteristic flaws 11a may include flaws due to a polishing process performed in finishing during processing of the stationary structural object 11, for example.

According to this embodiment, capture of specular reflected light component into the imaging optical system 105 is suppressed. Consequently, even if the exposure time period T is reduced to be less than 100 $\mu$s, an image having sufficiently high contrast can be obtained. The positional relationship in the optical system between the imaging optical system 105 and the optical transmitter 100 before image formation in the gate image sensor 101 is configured to be a predefined positional relationship for being able to obtain an optically high contrast image. Accordingly, even if the exposure time period T is reduced to be less than 100 $\mu$s by the timing controller 104, the scattered luminance pattern corresponding to the irregularities on the surface of the stationary structural object 11 can be prevented from being lost owing to electric noise occurring at the gate image sensor 101.

That is, the positional relationship between the imaging optical system 105 and the optical transmitter 100 is not a predefined positional relationship for being able to obtain an optically high contrast image, it is difficult to discriminate the electric noise occurring at the gate image sensor 101 from the scattered luminance pattern corresponding to the irregularities on the surface of the stationary structural object 11, when the image signal of the gate image sensor 101 is processed by the image processor 102. On the contrary, the positional relationship between the imaging optical system 105 and the optical transmitter 100 is a predefined positional relationship for being able to obtain an optically high contrast image, the electric noise occurring at the gate image sensor 101 can be easily discriminated from the scattered luminance pattern corresponding to the irregularities on the surface of the stationary structural object 11, when the image signal of the gate image sensor 101 is processed by the image processor 102.

[Embodiment 6]

This embodiment adds a specular reflected light separation optical system 106 as an optical system to suppress capture of the specular reflected light component into the imaging optical system 105, which can obtain a sufficiently high contrast image even if the exposure time period T is reduced to be less than 100 $\mu$s. The configurations of the gate image sensor 101, the timing controller 104, the image processor 102, and the overall controller 103 are the same as those in Embodiment 1. The configuration of the imaging optical system 105 is the same as that in Embodiment 2 or Embodiment 3. The components in the optical transmitter 100 are the same as those in Embodiment 1 or Embodiment 4.

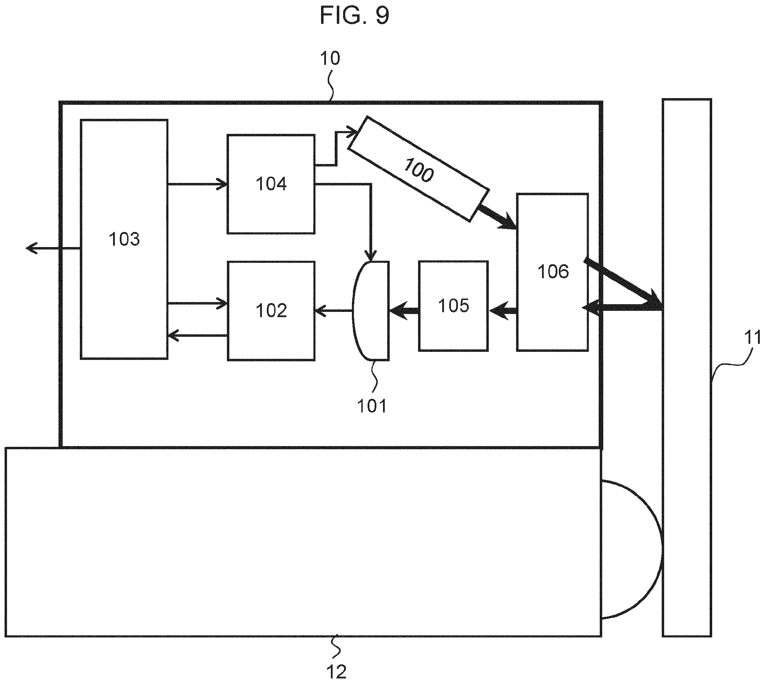

Figure 9 schematically shows an overall configuration of an elevator optical velocity measurement apparatus 10 in Embodiment 6 of the present invention. In Figure 9, the elevator optical velocity measurement apparatus 10 includes the specular reflected light separation optical system 106 as an optical system added to the optical system in Embodiment 1. The specular reflected light separation optical system 106 is disposed between the optical transmitter 100 and the stationary structural object 11 and between the imaging optical system 105 and the stationary structural object 11, and can separate, from each other, specular reflected light and scattered light in the reflected light reflected by the surface of the stationary structural object 11.

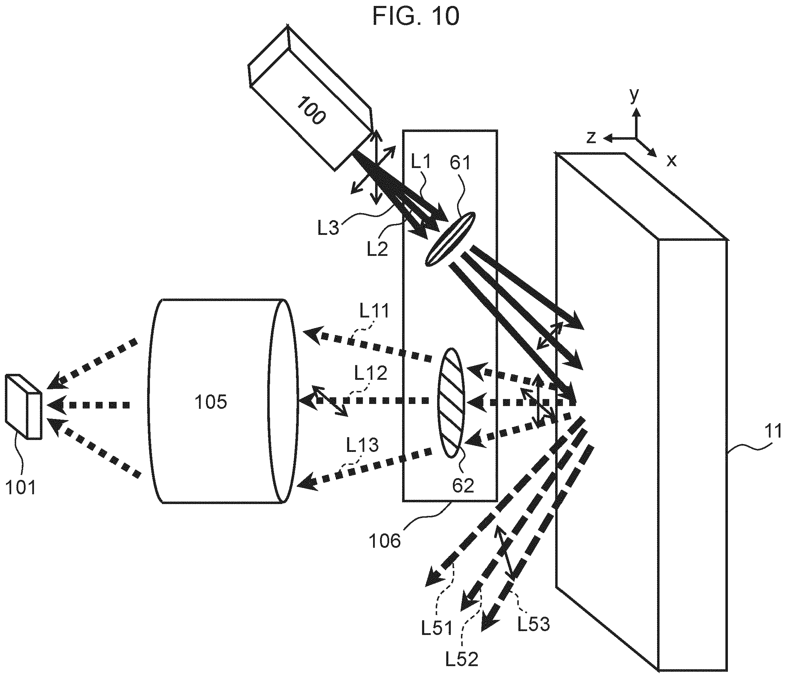

Figure 10 is a conceptual diagram showing the schematic configuration of the specular reflected light separation optical system 106 in Embodiment 6 of the present invention. Note that in Figure 10, the emitted light beams L1 to L3 from the optical transmitter 100 to the stationary structural object 11 are indicated by solid arrows, the specular reflected light beams (specular reflected light) L51 to L53 from the stationary structural object 11 are indicated by broken arrows, and the scattered light beams (scattered light) L11 to L13 are indicated by dotted arrows.

Embodiment 5 focuses on the characteristics of the irregularity pattern on the surface of the stationary structural object 11 serving as the detection target, and suppresses occurrence of the specular reflected light beams (specular reflected light) L51 to L53. Meanwhile, in this embodiment, a polarizer 61 and an analyzer 62 are adopted as the specular reflected light separation optical system 106. The polarizer 61 is arranged between the optical transmitter 100 and the stationary structural object 11. The analyzer 62 is arranged between the stationary structural object 11 and the imaging optical system 105. The specular reflected light separation optical system 106 includes: the polarizer 61 that aligns the polarization direction of light emitted from the optical transmitter 100 in a certain direction; and the analyzer 62 disposed in an area which is apart from a propagation path of specular reflected light in the reflected light reflected by the surface of the stationary structural object 11 and in which the scattered light belonging to the reflected light propagates, the analyzer removing light in a direction identical to a polarization direction of the specular reflected light and transmitting the scattered light.

In this case, the optical axis of the optical transmitter 100 is located so as to face the polarizer 61, and is located in a direction which is inclined from the y axis and in which light for illuminating the surface of the stationary structural object 11 is obliquely incident on the surface of the stationary structural object 11. Furthermore, the polarizer 61 is disposed at a position where the emitted light beams L1 to L3 from the optical transmitter 100 are incident on the surface of the stationary structural object 11 in an oblique direction. The polarization directions of the emitted light beams L1 to L3 at the polarizer 61 are limited in advance in certain directions. The optical axis of the analyzer 62 is located so as to be positioned on a common straight line with the line connecting the optical axis of the imaging optical system 105 and the center of the imaging plane of the gate image sensor 101. The analyzer 62 is disposed so as to transmit only the scattered light beams L11 to L13 in directions perpendicular to the polarization directions of the emitted light beams L1 to L3, emit the transmitting scattered light beams L11 to L13 to the imaging optical system 105, and suppress capture of the specular reflected light beams (specular reflected light) L51 to L53, when the analyzer 62 detects reflected light obtained by the emitted light beam polarized by the polarizer 61 being reflected by the stationary structural object 11.

The position at which the analyzer 62 is disposed may be between the stationary structural object 11 and the imaging optical system 105 or between the imaging optical system 105 and the gate image sensor 101. The polarizer 61 and the analyzer 62 may be polarizing films that utilize the orientation direction of liquid crystal, polarization prisms that utilize the birefringence of a crystal, or a wire grid polarizer. Instead of adoption of the polarizer 61, a light source element, such as a laser, which has previously polarized output, may be adopted as a light source in the optical transmitter 100.

According to this embodiment, capture of the specular reflected light can be highly efficiently suppressed by the method of analyzing the polarization, in comparison with Embodiment 5. As a result, an image having higher contrast can be obtained. In a case where liquid, such as oil, is applied on the surface of the stationary structural object 11, the effects of surface specular reflected light due to the liquid can be eliminated by selecting the polarization direction in which effects of the surface specular reflected light due to the liquid are detected.

[Embodiment 7]

This embodiment adds, to the specular reflected light separation optical system 106, a function of invariantly holding the illumination position to the stationary structural object 11 with respect to shakes of the elevator car 12 in the z-axis direction. The configurations of the gate image sensor 101, the timing controller 104, the image processor 102, and the overall controller 103 are the same as those in Embodiment 1. The configuration of the imaging optical system 105 is the same as that in Embodiment 2 or Embodiment 3. The components in the optical transmitter 100 are the same as those in Embodiment 1 or Embodiment 4.

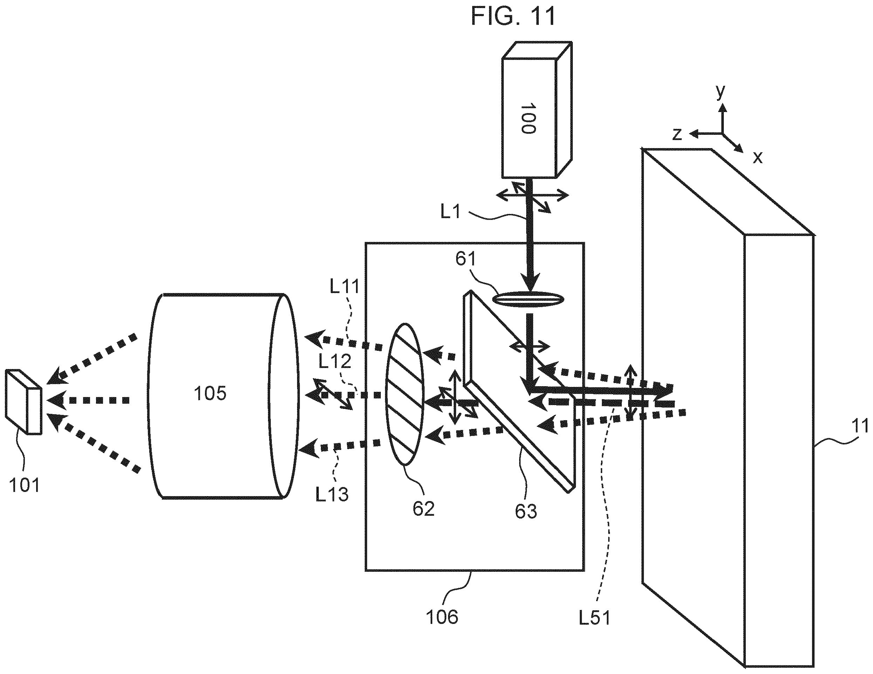

Figure 11 is a conceptual diagram showing the schematic configuration of the specular reflected light separation optical system 106 in Embodiment 7 of the present invention. Note that in Figure 11, the emitted light beam L1 from the optical transmitter 100 to the stationary structural object 11 is indicated by solid arrows, the specular reflected light beam (specular reflected light) L51 from the stationary structural object 11 is indicated by broken arrows, and the scattered light beams (scattered light) L11 to L13 are indicated by dotted arrows.

To suppress capture of the specular reflected light component, Embodiment 6 shows an optical arrangement where the emitted light beam (illumination light) from the optical transmitter 100 is obliquely incident on the stationary structural object 11, and further analyzes the polarization of reflected light reflected by the stationary structural object 11. Meanwhile, this embodiment adopts an optical arrangement of concentric incident-light illumination where capture of the specular reflected light is sufficiently suppressed by analyzing the polarization, and the illumination light is emitted perpendicularly to the stationary structural object 11.

Specifically, the specular reflected light separation optical system 106 includes: the polarizer 61 that aligns the polarization direction of the light emitted from the optical transmitter 100, in a certain direction; a beam splitter 63 that is disposed between the imaging optical system 105 and the stationary structural object 11, reflects light having transmitted through the polarizer 61 in a direction orthogonal to the y axis, emits the reflected light toward the surface of the stationary structural object 11, and transmits the reflected light reflected by the surface of the stationary structural object 11 in a direction intersecting with the y axis; and the analyzer 62 that is disposed in an area in which at least the scattered light in the reflected light having transmitted through the beam splitter 63 propagates, removes light in a direction identical to a polarization direction of the specular reflected light belonging to the reflected light, and transmits the scattered light.

In this case, the optical axis of the optical transmitter 100 is disposed so as to face the polarizer 61, and is disposed in a direction parallel to the y axis. The optical axis of the optical transmitter 100 may be in a direction parallel to the x axis perpendicular to the z axis and may be any direction in the xy surface only if the direction is perpendicular to the z axis. The optical axis of the polarizer 61 is on a common straight line with the optical axis of the optical transmitter 100 (the optical axis of the emitted light beam L1), and is disposed at a position parallel to the stationary structural object 11 (parallel to the y axis). The polarization direction with respect to the emitted light beam L1 is limited in advance in a certain direction. The optical axis of the analyzer 62 is located so as to be positioned on a common straight line with the line connecting the optical axis of the imaging optical system 105 and the center of the imaging plane of the gate image sensor 101.

The center of the beam splitter 63 is located at a position where the optical axis of the polarizer 61 and the optical axis of the analyzer 62 intersect with each other. The beam splitter 63 reflects the light having transmitted through the polarizer 61 in a perpendicular direction (the negative direction of the z axis) with respect to the incident angle of the light, toward the stationary structural object 11, and allows the reflected light to be incident perpendicularly on the surface of the stationary structural object 11. Furthermore, the beam splitter 63 transmits the reflected light (including the scattered light and the specular reflected light) reflected by the surface of the stationary structural object 11, toward the analyzer 62. The analyzer 62 transmits only the scattered light beams (scattered light) L11 to L13 in the reflected light having transmitted through the beam splitter 63.

Similar to Embodiment 6, the analyzer 62 may be between the imaging optical system 105 and the gate image sensor 101. The positions of the optical transmitter 100, and the imaging optical system 105 and the gate image sensor 101 may be inverted from each other. That is, the optical arrangement may be adopted where the emitted light beam L1 from the optical transmitter 100 transmits through the beam splitter 63 via the analyzer 62, and is subsequently incident on the stationary structural object 11, and the reflected light reflected by the surface of the stationary structural object 11 is reflected by the beam splitter 63 toward the imaging optical system 105.

According to this embodiment, advantageous effects similar to those in Embodiment 6 can be exerted, and the emitted light beam L1 from the optical transmitter 100 is incident on perpendicularly the surface of the stationary structural object 11. The illumination position on the stationary structural object 11 can be kept invariant with respect to the shakes of the elevator car 12 in the z-axis direction. As a result, the temporal variation of the illumination intensity can be suppressed to the minimum.

[Embodiment 8]

This embodiment invariantly holds the illumination position to the stationary structural object 11 with respect to shakes of the elevator car 12 in the z-axis direction, and constitutes a concentric incident-light type dark-field illumination optical system inexpensively without including an expensive polarizer. The configurations of the gate image sensor 101, the timing controller 104, the image processor 102, and the overall controller 103 are the same as those in Embodiment 1.
The configuration of the imaging optical system 105 is the same as that in Embodiment 2 or Embodiment 3. The components in the optical transmitter 100 are the same as those in Embodiment 1 or Embodiment 4.

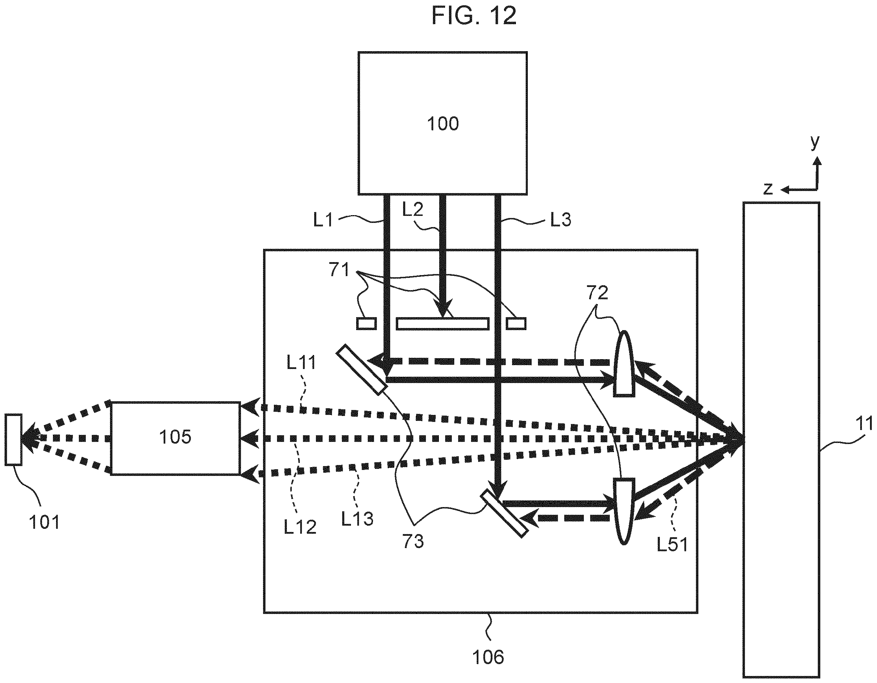

Figure 12 is a conceptual diagram showing the schematic configuration of the specular reflected light separation optical system 106 in Embodiment 8 of the present invention. Note that in Figure 10, the emitted light beams L1 to L3 from the optical transmitter 100 to the stationary structural object 11 are indicated by solid arrows, the specular reflected light beams (specular reflected light) L51 and L52 from the stationary structural object 11 are indicated by broken arrows, and the scattered light beams (scattered light) L11 to L13 are indicated by dotted arrows.

Embodiments 6 and 7 show the optical arrangement where the specular reflected light and the scattered light are separated from each other by the polarizing element including the polarizer 61 and the analyzer 62. On the other hand, this embodiment shows an optical arrangement that spatially separates the specular reflected light and the scattered light from each other.

The specular reflected light separation optical system 106 includes: a ring diaphragm 71 that converts the light emitted from the optical transmitter 100, into a light beam having a hollow illuminance distribution in a direction orthogonal to the optical axis of the optical transmitter 100; a perforated mirror 73 that is an annular mirror disposed in a direction intersecting with the optical axis of the optical transmitter 100, and reflects the light beam having transmitted through the ring diaphragm 71, in a direction orthogonal to the y axis; and a ring-shaped condenser lens 72 that is disposed between the perforated mirror 73 and the stationary structural object 11, collects the light beam reflected by the perforated mirror 73, and emits the collected light beam toward the surface of the stationary structural object 11.

In this case, the optical axis of the optical transmitter 100 is located so as to face the ring diaphragm 71, and is located in a direction (the y-axis direction or the x-axis direction) perpendicular to the z axis. The ring-shaped condenser lens 72 has a space portion whose center is located on a common straight line with the optical axis of the imaging optical system 105, collects specular reflected light in the reflected light reflected by the surface of the stationary structural object 11 in an area apart from the space portion, and emits the scattered light belonging to the reflected light to the imaging optical system 105 through the space portion. The ring diaphragm 71 has a center on a common straight line with the optical axis of the optical transmitter 100, is disposed in parallel to the surface of the stationary structural object 11 (parallel to the y-axis direction), converts the emitted light beams L1 to L3 from the optical transmitter 100 into the light beams (L1 and L3) having a hollow illuminance distribution in a sectional direction (orthogonal direction) with respect to the optical axis, and emits the beams toward the perforated mirror 73. The perforated mirror 73 is a mirror having a hole (space) at the center, is disposed such that the center of the hole is positioned on a common straight line with the optical axis of the optical transmitter 100 and on a common straight line with the optical axis of the imaging optical system 105, and is disposed in a direction (oblique direction) intersecting with the optical axis of the optical transmitter 100 and the optical axis of the imaging optical system 105 as a whole. The perforated mirror 73 reflects the light beams (L1 and L3) from the ring diaphragm 71 toward the ring-shaped condenser lens 72.

The ring-shaped condenser lens 72 is a ring-shaped lens having a space at the center, and is disposed such that the optical axis is positioned on a common straight line with the optical axis of the imaging optical system 105. The ring-shaped condenser lens 72 collects the light beams (L1 and L3) from the ring diaphragm 71, and illuminates the surface of the stationary structural object 11. The specular reflected light beam (specular reflected light) L51 in the reflected light reflected by the surface of the stationary structural object 11 transmits through the ring-shaped condenser lens 72, and is subsequently emitted toward the perforated mirror 73. The scattered light beams (scattered light beams) L11 to L13 in the reflected light reflected by the surface of the stationary structural object 11 transmit through the space portion of the ring-shaped condenser lens 72 and the hole (space portion) of the perforated mirror 73, and subsequently enter the imaging optical system 105.

When the emitted light beams L1 to L3 from the optical transmitter 100 are converted by the ring diaphragm 71 into the light beams having a hollow illuminance distribution, the emitted light beams L1 to L3 may be converted into Laguerre-Gaussian beams. The emitted light beams L1 to L3 from the optical transmitter 100 may be or not be parallel light. In this case, it is assumed that the components belonging to the specular reflected light separation optical system 106 are designed such that the specular reflected light beam (specular reflected light) L51 at the surface of the stationary structural object 11 is reflected by the perforated mirror 73 and is prevented from entering the imaging optical system 105.

According to this embodiment, the illumination position on the stationary structural object 11 can be kept invariant with respect to shakes of the elevator car 12 in the z-axis direction, and a concentric incident-light type dark-field illumination optical system can be configured inexpensively without including an expensive polarizer.

[Embodiment 9]

This embodiment is provided with a position reset processor 107 that resets the absolute position of the elevator car 12, thus improving the accumulated positional accuracy of the elevator car 12. The configurations of the gate image sensor 101, the timing controller 104, the image processor 102, and the overall controller 103 are the same as those in Embodiment 1. The configuration of the imaging optical system 105 is the same as that in Embodiment 2 or Embodiment 3. The components in the optical transmitter 100 are the same as those in Embodiment 1 or Embodiment 4. The positional relationship between the optical transmitter 100, the stationary structural object 11, and the imaging optical system 105 may be the same as those in Embodiment 5. Alternatively, the specular reflected light separation optical system 106 may be configured. The configuration in this case is the same as that in Embodiment 6, Embodiment 7 or Embodiment 8.

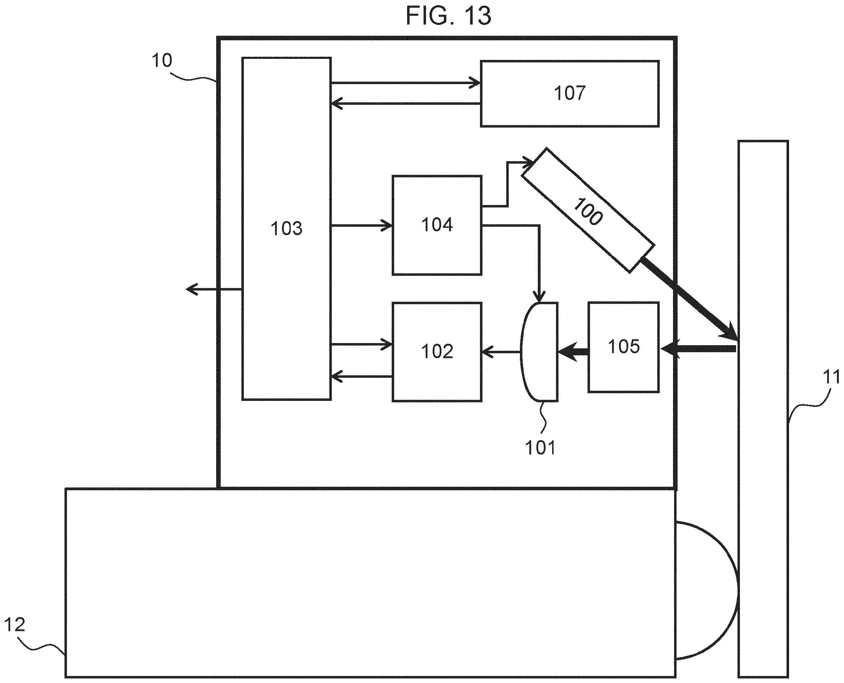

Figure 13 schematically shows an overall configuration of an elevator optical velocity measurement apparatus 10 in Embodiment 9 of the present invention. In Figure 13, with respect to the configuration in Embodiment 1, the position reset processor 107 is added to the elevator optical velocity measurement apparatus 10. The position reset processor 107 is coupled to the overall controller 103.

The position reset processor 107 transmits and receives information to and from the overall controller 103. Upon detection of the absolute position set on the surface of the stationary structural object 11 on the basis of information about an image from the overall controller 103, this processor outputs, to the overall controller 103, a reset signal for resetting the absolute position serving as a reference position for calculation of the position of the elevator car 12.

At this time, the position reset processor 107 stores in advance information on an image about an irregularity pattern (absolute position reference image) in a memory element in the position reset processor 107. Every time information about an image from the overall controller 103, for example, information about an image of the irregularity pattern that is characteristic and highly periodical, such as of a juncture residing on the surface of the stationary structural object 11, is received along with movement of the elevator car 12, this processor compares the information that is received and is about an absolute position detection image due to the irregularity pattern, with the information stored in advance in the memory element (information about the absolute position reference image due to the irregularity pattern). Every time a strong correlation occurs between both the pieces (both the images coincide), this processor outputs the reset signal to the overall controller 103.

On condition of receiving the reset signal, the overall controller 103 resets the absolute position, subsequently calculates the position (relative position) on the hoistway of the elevator car 12 on the basis of signal information from the image processor 102 with reference to the reset absolute position, and transmits a calculation result to the control board. Accordingly, even when the moving direction of the elevator car 12 is randomly changed upward or downward, the overall controller 103 can correctly calculate the position (relative position) on the hoistway of the elevator car 12 and can improve the accumulated positional accuracy of the elevator car 12.

In this embodiment, the function of the overall controller 103 and the function of the position reset processor 107 can be added to the image processor 102. In this case, for example, the image processor 102 compares the absolute position detection image (the image having a irregularity pattern that is characteristic and highly periodic, such as of a juncture residing on the surface of the stationary structural object 11) obtained by processing the electric signal output from the gate image sensor 101, with the absolute position reference image (the absolute position reference image due to the irregularity pattern) preset and stored as the image for identifying the absolute position on the stationary structural object 11. On condition of coincidence between the absolute position detection image and the absolute position reference image, this processor can reset the reference time (measurement start period) for measurement of the position of the elevator car 12, calculate the position of the elevator car 12 indicating the movement distance from the absolute position of the elevator car 12 on the basis of the elapsed time period from the reset reference time and the velocity of the elevator car 12, and output the calculation result to the overall controller 103. In this case, the image processor 102 can correctly calculate the position (relative position) on the hoistway of the elevator car 12 with a smaller number of elements than those in a case of using the overall controller 103 and the position reset processor 107, and can improve the accumulated positional accuracy of the elevator car 12.

As the characteristic irregularity pattern, the existing irregularity pattern on the stationary structural object 11 may be used. Alternatively, in a case of attaching a marker having an irregularity pattern on the surface of the stationary structural object 11, the irregularity pattern of this marker may be used. As means for detecting the absolute position of the elevator car 12, a combination of position detection sensors, such as a magnetic sensor and an atmospheric pressure sensor, which are different from optical one and of a different type, may be used.

According to this embodiment, every time the absolute position on the hoistway of the elevator car 12 is detected along with movement of the elevator car 12, the absolute position is reset. Consequently, the accumulated positional accuracy of the elevator car 12 can be improved.

[Embodiment 10]

This embodiment measures a time period until the emitted light beam (emitted light) emitted from the optical transmitter 100 passes through the imaging optical system 105 and enters the gate image sensor 101, and measures the distance from the elevator car 12 to the stationary structural object 11 on the basis of a measurement result. The configurations of the gate image sensor 101, the image processor 102, and the overall controller 103 are the same as those in Embodiment 1. The configuration of the imaging optical system 105 is the same as that in Embodiment 2 or Embodiment 3. The components in the optical transmitter 100 are the same as those in Embodiment 1 or Embodiment 4. The positional relationship between the optical transmitter 100, the stationary structural object 11, and the imaging optical system 105 may be the same as those in Embodiment 5. Alternatively, the specular reflected light separation optical system 106 may be configured. The configuration in this case is the same as that in Embodiment 6, Embodiment 7 or Embodiment 8. The position reset processor 107 may be configured. The configuration in this case is the same as that in Embodiment 8.

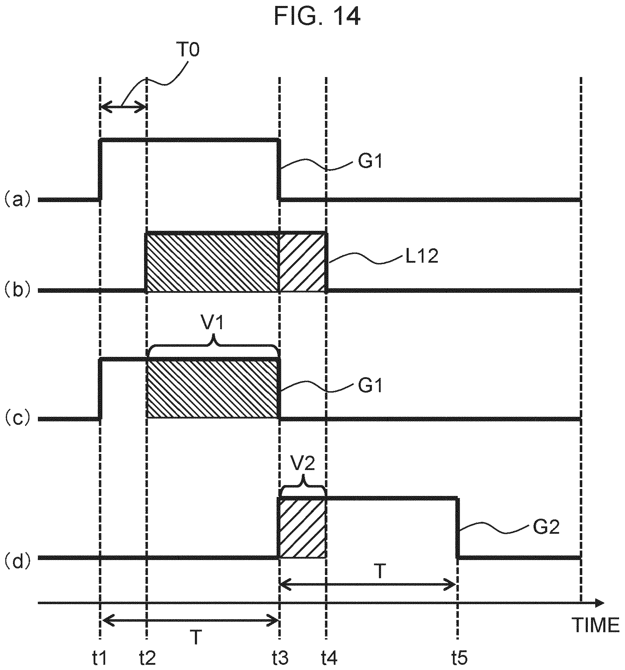

Figure 14 is a timing chart of the gate signal transmitted from the timing controller 104 to the optical transmitter 100 and the gate image sensor 101, and the scattered light entering the gate image sensor 101 from the stationary structural object 11.

As shown in Figure 14(a), when a first gate signal (gate pulse signal) G1 that is at a high level in a period from time t1 to time t3 is transmitted from the timing controller 104 to the optical transmitter 100, the emitted light beam (illumination light) is emitted from the optical transmitter 100 to the stationary structural object 11, and scattered light in the reflected light reflected by the surface of the stationary structural object 11 enters the gate image sensor 101 through the imaging optical system 105. In this case, as shown in Figure 14(b), scattered light (scattered light with a luminance at a high level) L12 that is at a high level in a period from time t2 to time t4 enters the gate image sensor 101. That is, the scattered light L12 having a temporal delay = (time t2 - time t1) with respect to the emitted light beam emitted from the optical transmitter 100 enters the gate image sensor 101.

On the other hand, as shown in Figure 14(c), when a first gate signal (gate pulse signal) G1 that is at a high level in a period from time t1 to time t3 is transmitted from the timing controller 104 to the gate image sensor 101 at the same timing as the first gate signal G1 transmitted from the timing controller 104 to the gate image sensor 101, the gate image sensor 101 captures the scattered light L12 from the imaging optical system 105 on the imaging plane (first imaging plane) with the period from time t1 to time t3 being adopted as the exposure time period T, and generates an image signal (an image signal including an image V1) taken in response to the first gate signal G1. In this case, the period during which the scattered light L12 at a high level enters the gate image sensor 101 from the imaging optical system 105 is the period from time t2 to time t3 in the exposure time period T (time t1 to time t3). The image signal (the image signal including the image V1) taken in this period is output from the gate image sensor 101 to the image processor 102.

Next, as shown in Figure 14(d), when a second gate signal (gate pulse signal) G2 that is at a high level in a period from time t3 to time t5 is transmitted from the timing controller 104 to the gate image sensor 101, the gate image sensor 101 captures the scattered light L12 from the imaging optical system 105 on the imaging plane (second imaging plane) with the period from time t3 to time t4 being adopted as the exposure time period T, and generates an image signal (an image signal including an image V2) taken in response to the second gate signal G2. In this case, the period during which the scattered light L12 at a high level enters the gate image sensor 101 from the imaging optical system 105 is the period from time t3 to time t4 in the exposure time period T (time t3 to time t5). The image signal (the image signal including the image V2) taken in this period is output to the image processor 102.

Here, for calculating a transmission time period T0 (= period from time t1 to time t2) during which the emitted light beam emitted from the optical transmitter 100 to the stationary structural object 11 is reflected by the stationary structural object 11 and the scattered light L12 in the reflected light reflected by the surface of the stationary structural object 11 enters the gate image sensor 101, the image processor 102 captures the image signal including the image V1 and the image signal including the image V2 from the gate image sensor 101, and calculates the transmission time period T0 according to the following expression (1).

$$T0 = T \cdot V2/(V1 + V2) \ldots (1)$$

where T is the exposure time period defined by the first gate signal G1 and the second gate signal G2, V1 and V2 are areas corresponding to the sizes of the images belonging to the image signals output from the gate image sensor 101.

The image processor 102 calculates the distance from the elevator car 12 to the stationary structural object 11 on the basis of the transmission time period T0 × light velocity, and transmits information on the calculated distance to the overall controller 103. In this case, the image processor 102 or the overall controller 103 can compare the distance calculated by the image processor 102 with the setting value (reference value), and determine whether the elevator car 12 is blurred in the z-axis direction or not.

According to this embodiment, the distance from the elevator car 12 to the stationary structural object 11 can be measured. Consequently, it can be determined whether the elevator car 12 is blurred in the z-axis direction or not based on the measurement result.

Each of the aforementioned embodiments is for describing the present invention in a comprehensible manner, and is not limit the scope of the present invention. For example, the image processor 102, the overall controller 103, and the timing controller 104 may be arranged outside of the elevator car 12, and transmission and reception of information between the timing controller 104 and the optical transmitter 100, transmission and reception of information between the timing controller 104 and the gate image sensor 101, and transmission and reception of information between the gate image sensor 101 and the image processor 102 can be performed wiredly or wirelessly. Some components of each embodiment may be added, removed and replaced, with respect to other components.

Some or all of the aforementioned configurations, functions, processors, processing means and the like may be achieved by hardware by, for example, design with integrated circuits. The aforementioned configurations, functions and the like may be achieved through software by the processor analyzing and executing a program for achieving the individual functions. The achievement may be through software by analyzing and executing a program for achieving each function. Information, such as programs, tables, and files may be placed in a recording device, such as a memory, a hard disk, an SSD (Solid State Drive), or a recording medium, such as an IC card, an SD card, or a DVD.

[Reference Signs List]

10...Elevator optical velocity measurement apparatus, 11... Stationary structural object, 12...Elevator car, 21...Light source, 22...Illumination lens, 61... Polarizer, 62...Analyzer, 63...Beam splitter, 71...Ring diaphragm, 72...Ring-shaped condenser lens, 73...Perforated mirror, 81...Objective lens, 82...Diaphragm, 83 ... Condenser lens, 100...Optical transmitter, 101...Gate image sensor, 102...Image processor, 103...Overall controller, 104...Timing controller, 105...Imaging optical system, 106...Specular reflected light separation optical system, 107...Position reset processor

**Claims**

1.  An elevator comprising a car (12) configured to move along a hoistway, and further comprising:

    a velocity measurement apparatus (10) that is configured to measure a velocity of the car (12), wherein the velocity measurement apparatus (10), comprises:

    a timing controller (104) that is configured to generate a gate signal;
    an optical transmitter (100) that is configured to emit light to illuminate a stationary structural object (11) disposed along the hoistway, in response to the gate signal;
    a gate image sensor (101) that is configured to capture reflected light from the stationary structural object (11) on an imaging plane including a plurality of pixels for an exposure time period defined by the gate signal in response to the gate signal, and to convert an optical signal obtained from the reflected light into an electric signal according to luminances of the optical signal;
    an imaging optical system (105) that is disposed so as to face the stationary structural object (11), and that is configured to capture the reflected light reflected by the stationary structural object (11), and to form an image on the imaging plane of the gate image sensor (101); and

    an image processor (102) that is configured to process, as an image, the electric signal obtained from an output of the gate image sensor (101), and to calculate a velocity of the car (12) from a processing result,

    wherein at least the optical transmitter (100), the gate image sensor (101), and the imaging optical system (105) are disposed on the car (12), and
    wherein the image processor (102) is configured to:

    sequentially capture the electric signal from the gate image sensor (101) with a frame period corresponding to an occurrence period of the gate signal,
    generate a dark-field image on a frame-by-frame basis from each electric signal,
    calculate a displacement on the dark-field image occurring between a first measurement target image in a first frame of the dark-field image, and a second measurement target image that is a measurement target image in a second frame of the dark-field image and corresponds to the first measurement target image, among the generated frames of the dark-field image, and
    calculate the velocity of the car (12) from a ratio between the calculated displacement on the dark-field image, and a time period indicating a difference between the first frame and the second frame,
    the elevator being **characterized in that**
    the timing controller (104) is configured to set the exposure time period to a value smaller than a time period obtained from a ratio between a spatial resolution of the image formed on the imaging plane and a maximum moving velocity at which the car (12) is able to move,
    and **in that**
    the imaging optical system (105) comprises:

    a first lens (81) that is disposed so as to face the stationary structural object (11), and that is configured to collect scattered light reflected by the stationary structural object (11);
    a diaphragm (82) that is configured to limit a quantity of light of the scattered light collected by the first lens (81); and
    a second lens (83) that is disposed between the diaphragm (82) and the gate image sensor (101), and that is configured to collect the scattered light from the diaphragm (82), and to emit the collected scattered light toward the imaging plane of the gate image sensor (101),
wherein the diaphragm (82) has a center that is located on a common straight line with an optical axis of the first lens (81) and is located on a focal position of the second lens (83), and
the second lens (83) has an optical axis located on a common straight line with the optical axis of the first lens (81).

2. The elevator according to claim 1,
wherein when the spatial resolution is 0.5 mm and the maximum moving velocity is 5 m/s, the exposure time period is less than 100 µs.

3. The elevator according to claim 1 or 2,
wherein the optical transmitter (100) includes a light source (21), and an illumination lens (22) that is configured to collect light from the light source (21) and to emit the collected light toward the stationary structural object (11) in a diffused manner.

4. The elevator according to claim 1,

wherein the optical transmitter (100) has an optical axis that is a virtual axis formed on the stationary structural object (11), the optical axis being located in a direction that is inclined from an axis parallel to a moving direction of the car (12) and being configured to allow the light for illuminating a surface of the stationary structural object (11) to be incident on the surface of the stationary structural object (11) in an oblique direction, and
the imaging optical system (105) is disposed in an area which is apart from a propagation path of specular reflected light in the reflected light reflected by the surface of the stationary structural object (11) and in which the scattered light propagates.

5. The elevator according to claim 1, further comprising

a specular reflected light separation optical system (106) that comprises:

a polarizer (61) that is configured to align a polarization direction of the light emitted from the optical transmitter (100), in a certain direction; and
an analyzer (62) disposed in an area which is apart from a propagation path of specular reflected light in the reflected light reflected by the surface of the stationary structural object (11) and in which the scattered light belonging to the reflected light propagates, the analyzer (62) being configured to remove light in a direction identical to a polarization direction of the specular reflected light and to transmit the scattered light, and

wherein the optical transmitter (100) has an optical axis located so as to face the polarizer (61).

6. The elevator according to claim 1, further comprising a specular reflected light separation optical system (106) that comprises:

a polarizer (61) that is configured to align a polarization direction of the light emitted from the optical transmitter (100), in a certain direction;
a beam splitter (63) that is disposed between the imaging optical system (105) and the stationary structural object (11), and that is configured to reflect light having transmitted through the polarizer (61) in a direction orthogonal to a virtual axis formed on the stationary structural object (11) and parallel to a moving direction of the car (12), to emit the reflected light toward a surface of the stationary structural object (11), and to transmit the reflected light reflected by the surface of the stationary structural object (11) in a direction intersecting with the virtual axis; and
an analyzer (62) that is disposed in an area in which at least the scattered light in the reflected light having transmitted through the beam splitter (63) propagates, and that is configured to remove light in a direction identical to a polarization direction of the specular reflected light belonging to the reflected light, and to transmit the scattered light,
wherein the optical transmitter (100) has an optical axis located so as to face the polarizer (61), and
the analyzer (62) has a center located on a common straight line with an optical axis of the imaging optical system (105).

7. The elevator according to claim 1, further comprising a specular reflected light separation optical system (106) that comprises:

a ring diaphragm (71) that is configured to convert the light emitted from the optical transmitter (100), into a light beam having a hollow illuminance distribution in a direction orthogonal to an optical axis of the optical transmitter (100);
a perforated mirror (73) that is an annular mirror disposed in a direction intersecting with the optical axis of the optical transmitter (100), and that is configured to reflect the light beam having transmitted through the ring diaphragm (71), in a direction orthogonal to a virtual axis formed on the stationary structural object (11) and parallel to a moving direction of the car (12); and

a ring-shaped condenser lens (72) that is disposed between the perforated mirror (73) and the stationary structural object (11), and that is configured to collect the light beam reflected by the perforated mirror (73), and to emit the collected light beam toward a surface of the stationary structural object (11),

wherein the optical transmitter (100) has an optical axis located so as to face the ring diaphragm (71), and

the ring-shaped condenser lens (72) has a space portion whose center is located on a common straight line with an optical axis of the imaging optical system (105), and is configured to collect specular reflected light in the reflected light reflected by the surface of the stationary structural object (11) in an area apart from the space portion, and to emit the scattered light belonging to the reflected light to the imaging optical system (105) through the space portion.

8. The elevator according to claim 1,
   wherein the image processor (102) is configured to compare an absolute position detection image obtained by processing the electric signal output from the gate image sensor (101) with an absolute position reference image stored as an image for identifying an absolute position on the stationary structural object (11), to reset a reference time for measuring a position of the car (12) on condition of coincidence between the absolute position detection image and the absolute position reference image, and to calculate the position of the car (12) indicating a movement distance of the car (12) from the absolute position, based on an elapsed time period from the reset reference time and the velocity of the car (12) .

## Patentansprüche

1. Aufzug, umfassend eine Kabine (12), die ausgelegt ist, um sich entlang eines Aufzugschachts zu bewegen, und ferner Folgendes umfasst:

   eine Geschwindigkeitsmessvorrichtung (10), die ausgelegt ist, um eine Geschwindigkeit der Kabine (12) zu messen,
   wobei die Geschwindigkeitsmessvorrichtung (10) Folgendes umfasst:

   eine Zeitgebungssteuerung (104), die ausgelegt ist, um ein Gate-Signal zu erzeugen;
   einen optischen Sender (100), der ausgelegt ist, um als Reaktion auf das Gate-Signal Licht auszustrahlen, um ein stationäres strukturelles Objekt (11) zu beleuchten, das entlang des Aufzugschachts angeordnet ist;
einen Gate-Bildsensor (101), der ausgelegt ist, um reflektiertes Licht von dem stationären strukturellen Objekt (11) auf einer Bildebene, die eine Vielzahl von Pixeln beinhaltet, für eine Belichtungszeitspanne, die durch das Gate-Signal definiert ist, als Reaktion auf das Gate-Signal einzufangen, und um ein optisches Signal, das aus dem reflektierten Licht erhalten wurde, gemäß Leuchtdichten des optischen Signals in ein elektrisches Signal umzuwandeln;
ein bildgebendes optisches System (105), das so angeordnet ist, um dem stationären strukturellen Objekt (11) zugewandt zu sein, und das ausgelegt ist, um das reflektierte Licht, das durch das stationäre strukturelle Objekt (11) reflektiert wird, einzufangen, und um auf der Bildebene des Gate-Bildsensors (101) ein Bild auszubilden; und
einen Bildprozessor (102), der ausgelegt ist, um das elektrische Signal, das aus einer Ausgabe des Gate-Bildsensors (101) erhalten wurde, als Bild zu verarbeiten und um eine Geschwindigkeit der Kabine (12) ausgehend von einem Verarbeitungsergebnis zu berechnen,
wobei zumindest der optische Sender (100), der Gate-Bildsensor (101) und das bildgebende optische System (105) auf der Kabine (12) angeordnet sind,
wobei
der Bildprozessor (102) ausgelegt ist, um:

   das elektrische Signal aufeinanderfolgend von dem Gate-Bildsensor (101) mit einer Rahmenperiode zu empfangen, die einer Auftretungsperiode des Gate-Signals entspricht,
   ein Dunkelfeldbild auf einer Rahmen-für-Rahmen-Basis aus jedem elektrischen Signal zu erzeugen,
   eine Verschiebung auf dem Dunkelfeldbild, die zwischen einem ersten Messzielbild in einem ersten Rahmen des Dunkelfeldbilds und einem zweiten Messzielbild, das in einem zweiten Rahmen des Dunkelfeldbilds ein Messzielbild ist und dem ersten Messzielbild entspricht, auftritt, aus den erzeugten Rahmen des Dunkelfeldbilds zu berechnen, und
   die Geschwindigkeit der Kabine (12) aus einem Verhältnis zwischen der berechneten Verschiebung auf dem Dunkelfeldbild und einer Zeitspanne, die eine Differenz zwischen dem ersten Rahmen und dem zweiten Rahmen angibt, zu berechnen,

wobei der Aufzug **dadurch gekennzeichnet ist, dass**:

die Zeitgebungssteuerung (104) ausgelegt ist, um die Belichtungszeitspanne auf einen Wert einzustellen, der kleiner ist als eine Zeitspanne, die aus einem Verhältnis zwischen einer räumlichen Auflösung des auf der Bildebene erzeugten Bilds und einer maximalen Bewegungsgeschwindigkeit, mit der sich die Kabine (12) bewegen kann, erhalten wird, und dass:

das bildgebende optische System (105) Folgendes umfasst:

eine erste Linse (81), die so angeordnet ist, um dem stationären strukturellen Objekt (11) zugewandt zu sein, und die ausgelegt ist, um Streulicht, das durch das stationäre strukturelle Objekt (11) reflektiert wird, zu sammeln;

eine Blende (82), die ausgelegt ist, um eine Menge von Licht des Streulichts, das von der ersten Linse (81) gesammelt wird, zu begrenzen; und eine zweite Linse (83), die zwischen der Blende (82) und dem Gate-Bildsensor (101) angeordnet ist, und die ausgelegt ist, um das Streulicht von der Blende (82) zu sammeln, und um das gesammelte Streulicht in Richtung der Bildebene des Gate-Bildsensors (101) auszustrahlen,

wobei die Blende (82) einen Mittelpunkt aufweist, der auf einer gemeinsamen geraden Linie mit einer optischen Achse der ersten Linse (81) angeordnet ist und an einer Brennpunktposition der zweiten Linse (83) angeordnet ist, und wobei die zweite Linse (83) eine optische Achse aufweist, die auf einer gemeinsamen geraden Linie mit der optischen Achse der ersten Linse (81) angeordnet ist.

2. Aufzug nach Anspruch 1, wobei, wenn die räumliche Auflösung 0,5 mm beträgt und die maximale Bewegungsgeschwindigkeit 5 m/s ist, die Belichtungszeitspanne kürzer als 100 μs ist.

3. Aufzug nach Anspruch 1 oder 2, wobei der optische Sender (100) eine Lichtquelle (21) und eine Beleuchtungslinse (22) umfasst, die ausgelegt ist, um Licht von der Lichtquelle (21) zu sammeln und um Licht auf diffuse Weise in Richtung des stationären strukturellen Objekts (11) auszustrahlen.

4. Aufzug nach Anspruch 1,

wobei der optische Sender (100) eine optische Achse aufweist, die eine virtuelle Achse ist, die auf dem stationären strukturellen Objekt (11) ausgebildet ist, wobei die optische Achse in eine Richtung angeordnet ist, die von einer Achse, die parallel zu einer Bewegungsrichtung der Kabine (12) ist, geneigt ist, und ausgelegt ist, um das Licht zum Beleuchten einer Oberfläche des stationären strukturellen Objekts (11) in einer schiefen Richtung auf die Oberfläche des stationären strukturellen Objekts (11) auftreffen zu lassen, und

wobei das bildgebende optische System (105) in einem Bereich angeordnet ist, der von einem Ausbreitungspfad von spiegelnd reflektiertem Licht in dem reflektierten Licht, das durch die Oberfläche des stationären strukturellen Objekts (11) reflektiert wurde, beabstandet ist und in dem sich das Streulicht ausbreitet.

5. Aufzug nach Anspruch 1, der ferner Folgendes umfasst:
ein optisches System (106) zur Trennung von spiegelnd reflektiertem Licht, das Folgendes umfasst:

einen Polarisator (61), der ausgerichtet ist, um eine Polarisationsrichtung des Lichts, das von dem optischen Sender (100) ausgestrahlt wurde, in eine bestimmte Richtung auszurichten; und

eine Analysevorrichtung (62), die in einem Bereich angeordnet ist, der von einem Ausbreitungspfad von spiegelnd reflektiertem Licht in dem reflektierten Licht, das durch die Oberfläche des stationären strukturellen Objekts (11) reflektiert wurde, und in dem sich das Streulicht, das zu dem reflektierten Licht gehört, ausbreitet, wobei die Analysevorrichtung (62) ausgelegt ist, um Licht in einer Richtung, die mit einer Polarisationsrichtung des spiegelnd reflektierten Lichts identisch ist, zu entfernen und das Streulicht durchzulassen, und

wobei der optische Sender (100) eine optische Achse aufweist, die angeordnet ist, um dem Polarisator (61) zugewandt zu sein.

6. Aufzug nach Anspruch 1, der ferner ein optisches System (106) zur Trennung von spiegelnd reflektiertem Licht umfasst, das Folgendes umfasst:

einen Polarisator (61), der ausgelegt ist, um eine Polarisationsrichtung des Lichts, das von dem optischen Sender (100) ausgestrahlt wird, in eine bestimmte Richtung auszurichten;
einen Strahlenteiler (63), der zwischen dem bildgebenden optischen System (105) und dem stationären strukturellen Objekt (11) angeordnet ist, und der ausgelegt ist, um Licht, das durch den Polarisator (61) in eine Richtung orthogonal zu einer virtuellen Achse, die auf dem stationären strukturellen Objekt (11) ausgebildet ist, und parallel zu einer Bewegungsrichtung der Kabine (12) durchgelassen wurde, zu reflektieren, um das reflektierte Licht in Richtung einer Oberfläche des stationären strukturellen Objekts (11) auszustrahlen und um das reflektierte Licht, das durch die Oberfläche des stationären strukturellen Objekts (11) reflektiert wurde, in eine Richtung durchzulassen, die die virtuelle Achse schneidet; und
eine Analysevorrichtung (62), die in einem Bereich angeordnet ist, in dem sich zumindest das Streulicht in dem reflektierten Licht, das durch den Strahlenteiler (63) durchgelassen wurde, ausbreitet, und die ausgelegt ist, um Licht in einer Richtung, die mit einer Polarisationsrichtung des spiegelnd reflektierten Lichts, das zu dem reflektierten Licht gehört, identisch ist, zu entfernen und um das Streulicht durchzulassen,
wobei der optische Sender (100) eine optische Achse aufweist, die angeordnet ist, um dem Polarisator (61) zugewandt zu sein, und
wobei die Analysevorrichtung (62) einen Mittelpunkt aufweist, der auf einer gemeinsamen geraden Linie mit einer optischen Achse des bildgebenden optischen Systems (105) angeordnet ist.

7. Aufzug nach Anspruch 1, der ferner ein optisches System (106) zur Trennung von spiegelnd reflektiertem Licht umfasst, das Folgendes umfasst:

eine Ringblende (71), die ausgelegt ist, um das Licht, das von dem optischen Sender (100) ausgestrahlt wurde, in einen Lichtstrahl umzuwandeln, der eine Hohlbeleuchtungsstärkenverteilung in eine Richtung orthogonal zu einer optischen Achse des optischen Senders (100) aufweist;
einen perforierten Spiegel (73), der ein ringförmiger Spiegel ist, der in eine Richtung angeordnet ist, die die optische Achse des optischen Senders (100) schneidet, und der ausgelegt ist, um den Lichtstrahl, der durch die Ringblende (71) durchgelassen wurde, in eine Richtung zu reflektieren, die orthogonal zu einer virtuellen Achse ist, die auf dem stationären strukturellen Objekt (11) und parallel zu einer Bewegungsrichtung der Kabine (12) ausgebildet ist; und
eine ringförmige Kondensorlinse (72), die zwischen dem perforierten Spiegel (73) und dem stationären strukturellen Objekt (11) angeordnet ist, und die ausgelegt ist, um den Lichtstrahl, der durch den perforierten Spiegel (73) reflektiert wurde, zu sammeln und um den gesammelten Lichtstrahl in Richtung einer Oberfläche des stationären strukturellen Objekts (11) auszustrahlen,
wobei der optische Sender (100) eine optische Achse aufweist, die so angeordnet ist, dass sie der Ringblende (71) zugewandt ist, und
wobei die ringförmige Kondensorlinse (72) einen Raumabschnitt aufweist, dessen Mittelpunkt auf einer gemeinsamen geraden Linie mit einer optischen Achse des bildgebenden optischen Systems (105) angeordnet ist, und die ausgelegt ist, um spiegelnd reflektiertes Licht in dem reflektierten Licht, das durch die Oberfläche des stationären strukturellen Objekts (11) reflektiert wurde, in einem Bereich zu sammeln, der von dem Raumabschnitt beabstandet ist, und um das Streulicht, das zu dem reflektierten Licht gehört, durch den Raumabschnitt an das bildgebende optische System (105) auszustrahlen.

8. Aufzug nach Anspruch 1,
wobei der Bildprozessor (102) ausgelegt ist, um ein Absolutposition-Detektionsbild, das durch Verarbeiten des elektrischen Signals, das aus dem Gate-Bildsensor (101) ausgegeben wurde, mit einem Absolutposition-Referenzbild zu vergleichen, das als Bild zum Identifizieren einer Absolutposition auf dem stationären strukturellen Objekt (11) gespeichert wurde, um eine Referenzzeit zum Messen einer Position der Kabine (12) unter der Bedingung zurückzustellen, dass das Absolutposition-Detektionsbild und das Absolutposition-Referenzbild übereinstimmen, und um die Position der Kabine (12), die einen Bewegungsabstand der Kabine (12) von der Absolutposition angibt, basierend auf einer verstrichenen Zeitspanne ab der zurückgestellten Referenzzeit und der Geschwindigkeit der Kabine (12) zu berechnen.

## Revendications

1. Ascenseur comprenant une cabine (12) configurée pour se déplacer le long d'un puits, et comprenant en outre :

un appareil de mesure de vitesse (10) qui est configuré pour mesurer une vitesse de la cabine (12),

dans lequel l'appareil de mesure de vitesse (10) comprend :

un dispositif de commande de synchronisation (104) qui est configuré pour générer un signal de porte ;

un émetteur optique (100) qui est configuré pour émettre de la lumière pour éclairer un objet structurel stationnaire (11) disposé le long du puits, en réponse au signal de porte ;

un capteur d'image de porte (101) qui est configuré pour capturer de la lumière réfléchie par l'objet structurel stationnaire (11) sur un plan d'imagerie comprenant une pluralité de pixels pendant une période de temps d'exposition définie par le signal de porte en réponse au signal de porte, et pour convertir un signal optique obtenu à partir de la lumière réfléchie en un signal électrique en fonction de luminances du signal optique ;

un système optique d'imagerie (105) qui est disposé de manière à faire face à l'objet structurel stationnaire (11), et qui est configuré pour capturer la lumière réfléchie qui est réfléchie par l'objet structurel stationnaire (11), et pour former une image sur le plan d'imagerie du capteur d'image de porte (101) ; et

un processeur d'image (102) qui est configuré pour traiter, en tant qu'image, le signal électrique obtenu à partir d'une sortie du capteur d'image de porte (101), et pour calculer une vitesse de la cabine (12) à partir d'un résultat de traitement,

dans lequel au moins l'émetteur optique (100), le capteur d'image de porte (101) et le système optique d'imagerie (105) sont disposés sur la cabine (12), et

dans lequel le processeur d'image (102) est configuré pour :

capturer séquentiellement le signal électrique provenant du capteur d'image de porte (101) avec une période de trame correspondant à une période d'occurrence du signal de porte,

générer une image en fond noir sur une base trame par trame à partir de chaque signal électrique,

calculer un déplacement sur l'image en fond noir se produisant entre une première image cible de mesure dans une première trame de l'image en fond noir, et une seconde image cible de mesure qui est une image cible de mesure dans une seconde trame de l'image en fond noir et correspond à la première image cible de mesure, parmi les trames générées de l'image en fond noir, et calculer la vitesse de la cabine (12) à partir d'un rapport entre le déplacement calculé sur l'image en fond noir, et une période de temps indiquant une différence entre la première trame et la seconde trame,

l'ascenseur étant **caractérisé en ce que**

le dispositif de commande de synchronisation (104) est configuré pour régler la période de temps d'exposition à une valeur inférieure à une période de temps obtenue à partir d'un rapport entre une résolution spatiale de l'image formée sur le plan d'imagerie et une vitesse de déplacement maximale à laquelle la cabine (12) est capable de se déplacer,

et **en ce que**

le système optique d'imagerie (105) comprend :

une première lentille (81) qui est disposée de manière à faire face à l'objet structurel stationnaire (11), et qui est configurée pour collecter de la lumière diffusée réfléchie par l'objet structurel stationnaire (11) ;

un diaphragme (82) qui est configuré pour limiter une quantité de lumière de la lumière diffusée collectée par la première lentille (81) ; et

une seconde lentille (83) qui est disposée entre le diaphragme (82) et le capteur d'image de porte (101), et qui est configurée pour collecter la lumière diffusée par le diaphragme (82), et pour émettre la lumière diffusée collectée vers le plan d'imagerie du capteur d'image de porte (101),

dans lequel le diaphragme (82) a un centre qui est situé sur une ligne droite commune avec un axe optique de la première lentille (81) et est situé sur une position focale de la seconde lentille (83), et

la seconde lentille (83) a un axe optique situé sur une ligne droite commune avec l'axe optique de la première lentille (81).

2. Ascenseur selon la revendication 1, dans lequel, lorsque la résolution spatiale est de 0,5 mm et la vitesse de déplacement maximale est de 5 m/s, la période de temps d'exposition est inférieure à 100 us.

3. Ascenseur selon la revendication 1 ou 2, dans lequel l'émetteur optique (100) comprend une source de lumière (21) et une lentille d'éclairage (22) qui est configurée pour collecter de la lumière provenant de la source de lumière (21) et pour émettre la lumière collectée vers l'objet structurel stationnaire (11) d'une manière diffuse.

4. Ascenseur selon la revendication 1,

   dans lequel l'émetteur optique (100) a un axe optique qui est un axe virtuel formé sur l'objet structurel stationnaire (11), l'axe optique étant situé dans une direction qui est inclinée par rapport à un axe parallèle à une direction de déplacement de la cabine (12) et étant configuré pour permettre à la lumière destinée à éclairer une surface de l'objet structurel stationnaire (11) d'être incidente sur la surface de l'objet structurel stationnaire (11) dans une direction oblique, et

   le système optique d'imagerie (105) est disposé dans une zone qui est espacée d'un trajet de propagation de lumière réfléchie spéculaire dans la lumière réfléchie qui est réfléchie par la surface de l'objet structurel stationnaire (11) et dans laquelle se propage la lumière diffusée.

5. Ascenseur selon la revendication 1, comprenant en outre un système optique de séparation de lumière réfléchie spéculaire (106) qui comprend :

   un polariseur (61) qui est configuré pour aligner une direction de polarisation de la lumière émise par l'émetteur optique (100), dans une certaine direction ; et
   un analyseur (62) disposé dans une zone qui est espacée d'un trajet de propagation de la lumière réfléchie spéculaire dans la lumière réfléchie qui est réfléchie par la surface de l'objet structurel stationnaire (11) et dans laquelle se propage la lumière diffusée appartenant à la lumière réfléchie, l'analyseur (62) étant configuré pour éliminer de la lumière dans une direction identique à une direction de polarisation de la lumière réfléchie spéculaire et pour transmettre la lumière diffusée, et

   dans lequel l'émetteur optique (100) a un axe optique situé de manière à faire face au polariseur (61).

6. Ascenseur selon la revendication 1, comprenant en outre un système optique de séparation de lumière réfléchie spéculaire (106) qui comprend :

   un polariseur (61) qui est configuré pour aligner une direction de polarisation de la lumière émise par l'émetteur optique (100), dans une certaine direction ;
   un diviseur de faisceau (63) qui est disposé entre le système optique d'imagerie (105) et l'objet structurel stationnaire (11), et qui est configuré pour réfléchir de la lumière ayant été transmise à travers le polariseur (61) dans une direction orthogonale à un axe virtuel formé sur l'objet structurel stationnaire (11) et parallèle à une direction de déplacement de la cabine (12), pour émettre la lumière réfléchie vers une surface de l'objet structurel stationnaire (11), et pour transmettre la lumière réfléchie qui est réfléchie par la surface de l'objet structurel stationnaire (11) dans une direction entrecoupant l'axe virtuel ; et
   un analyseur (62) qui est disposé dans une zone dans laquelle se propage au moins la lumière diffusée dans la lumière réfléchie ayant été transmise à travers le diviseur de faisceau (63), et qui est configuré pour éliminer de la lumière dans une direction identique à une direction de polarisation de la lumière réfléchie spéculaire appartenant à la lumière réfléchie, et pour transmettre la lumière diffusée,
   dans lequel l'émetteur optique (100) a un axe optique situé de manière à faire face au polariseur (61), et
   l'analyseur (62) a un centre situé sur une ligne droite commune avec un axe optique du système optique d'imagerie (105) .

7. Ascenseur selon la revendication 1, comprenant en outre un système optique de séparation de lumière réfléchie spéculaire (106) qui comprend :

   un diaphragme circulaire (71) qui est configuré pour convertir la lumière émise par l'émetteur optique (100), en un faisceau lumineux ayant une distribution d'éclairement creuse dans une direction orthogonale à un axe optique de l'émetteur optique (100) ;
   un miroir perforé (73) qui est un miroir annulaire disposé dans une direction entrecoupant l'axe optique de l'émetteur optique (100), et qui est configuré pour réfléchir le faisceau lumineux ayant été transmis à travers le diaphragme circulaire (71), dans une direction orthogonale à un axe virtuel formé sur l'objet structurel stationnaire (11) et parallèle à une direction de déplacement de la cabine (12) ; et

une lentille condensatrice en forme de cercle (72) qui est disposée entre le miroir perforé (73) et l'objet structurel stationnaire (11), et qui est configurée pour collecter le faisceau lumineux réfléchi par le miroir perforé (73), et pour émettre le faisceau lumineux collecté vers une surface de l'objet structurel stationnaire (11),

dans lequel l'émetteur optique (100) a un axe optique situé de manière à faire face au diaphragme circulaire (71), et

la lentille condensatrice en forme de cercle (72) possède une partie d'espace dont un centre est situé sur une ligne droite commune avec un axe optique du système optique d'imagerie (105), et est configurée pour collecter de la lumière réfléchie spéculaire dans la lumière réfléchie qui est réfléchie par la surface de l'objet structurel stationnaire (11) dans une zone espacée de la partie d'espace, et pour émettre la lumière diffusée appartenant à la lumière réfléchie vers le système optique d'imagerie (105) à travers la partie d'espace.

8. Ascenseur selon la revendication 1,
dans lequel le processeur d'image (102) est configuré pour comparer une image de détection de position absolue obtenue en traitant le signal électrique délivré en sortie par le capteur d'image de porte (101) avec une image de référence de position absolue stockée sous forme d'une image pour identifier une position absolue sur l'objet structurel stationnaire (11), pour réinitialiser un temps de référence pour mesurer une position de la cabine (12) sous condition d'une coïncidence entre l'image de détection de position absolue et l'image de référence de position absolue, et pour calculer la position de la cabine (12) indiquant un distance de déplacement de la cabine (12) par rapport à la position absolue, sur la base d'une période de temps écoulée depuis le temps de référence réinitialisé et de la vitesse de la cabine (12).

FIG. 1

EP 3 809 141 B1

FIG. 2

FIG. 3

# FIG. 4

S501 — START

S502 — OBTAIN DARK-FIELD IMAGE I(i)

S503 — STORE DARK-FIELD IMAGE I(i) IN MEMORY ELEMENT

S504 — READ DARK-FIELD IMAGES I(i) AND I(i-k) FROM MEMORY ELEMENT AND CALCULATE CROSS-CORRELATION FUNCTION C

S504 — BASED ON PEAK COORDINATE POSITION $\Delta x$ OF CROSS-CORRELATION CALCULATE MOVING VELOCITY $v = \Delta x/(k \times \Delta t)$

S505 — OUTPUT MOVING VELOCITY TO OVERALL CONTROLLER 103 ADD 1 TO i

S506 — SIGNAL OF MEASUREMENT COMPLETION FROM OVERALL CONTROLLER 103 RECEIVED? — No

Yes

S507 — END

FIG. 5

y
z

11

L11
L12
L13
L14
L15
L16
L17
L18
L19

81

82

105

101

FIG. 6

# FIG. 7

FIG. 8

FIG. 9

FIG. 10

EP 3 809 141 B1

FIG. 11

EP 3 809 141 B1

FIG. 12

EP 3 809 141 B1

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015068301 A1
- JP S6350758 A
- JP H02281145 A
- EP 0710817 B1
- JP S63139316 A
- US 2002112926 A1
- JP 2011073885 A